**Europäisches Patentamt**

**European Patent Office**

**Office européen des brevets**

(19)

(11) Veröffentlichungsnummer: **0 122 573**
**B1**

(12)

# EUROPÄISCHE PATENTSCHRIFT

(45) Veröffentlichungstag der Patentschrift:
**13.07.88**

(21) Anmeldenummer: **84103920.9**

(22) Anmeldetag: **08.04.84**

(51) Int. Cl.⁴: **B 65 G 21/04**, B 65 G 21/02,
B 65 G 23/22, B 65 G 41/00

(54) **Bausatz für die Erstellung von Bandfördervorrichtungen.**

(30) Priorität: **12.04.83 DE 8310729 U**

(43) Veröffentlichungstag der Anmeldung:
**24.10.84 Patentblatt 84/43**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**EP - A - 0 074 648**
**FR - A - 1 332 939**
**FR - A - 2 387 873**
**US - A - 3 944 054**
**US - A - 4 172 677**

(73) Patentinhaber: **Geppert, Helmut, Niederfeld 12,
D-5162 Niederzier-Krauthausen (DE)**

(72) Erfinder: **Geppert, Helmut, Niederfeld 12,
D-5162 Niederzier-Krauthausen (DE)**

(74) Vertreter: **Liermann, Manfred,
Josef-Schregel-Strasse 19, D-5160 Düren (DE)**

**Beschreibung**

Die Erfindung bezieht sich auf einen Bausatz für die Erstellung von Bandfördervorrichtungen mit mindestens einem Paar von Rahmenlängsholmen, die jeweils als Profilteil nichtebenen Querschnitts ausgebildet sind und auf dessen Mittellinie in einem Linienraster gleichen Lochabstandes angeordnete Löcher aufweisen, einer wenigstens der Zahl der Paare der Rahmenlängsholme entsprechenden Anzahl von Verbindungselementen oder Paaren derselben mit beidseitig jeweils etwa normal wegstehendem Befestigungsflansch zur Festlegung derselben an jeweils einem zugeordneten Rahmenlängsholm, einem Fördermittel in Form eines Bandes oder Riemens oder mehrerer derselben oder eines Scharnierbandes und einer der Zahl der Bänder bzw. Riemen bzw. Scharnierbänder entsprechenden Anzahl von Aufgabewalzen und Abgabewalzen, die im Zusammenbauzustand jeweils mittels eines Paares gegenüber jeweils einem zugeordneten Rahmenlängsholm festlegbarer Aufgabewalzenträger und Abgabewalzenträger abstützbar sind, mindestens einem Standfuss mit im Zusammenbauzustand an jeweils einem zugeordneten Rahmenlängsholm anschliessbaren Anschlussflanschen und einer der Zahl der im Zusammenbauzustand korrespondierenden Löcher der aneinander zu befestigenden Bauteile entsprechenden Anzahl von Verschraubungen.

Wie die Erfahrung gezeigt hat, wird häufig ein kurzfristiger Einsatz von Bandfördervorrichtungen vorstehend beschriebener Art an unterschiedlichen Stellen einer oder unterschiedlicher Förderlinien beispielsweise in einem Produktions- oder Distributionsbetrieb, wie etwa einer Grosshandlung od. dgl., auch in unterschiedlicher Funktionsausgestaltung für verschiedenartige Aufgabenstellungen erforderlich. Bisher ist hierfür stets für jeden einzelnen Einsatzfall ein im Hinblick auf die jeweilige zu lösende Aufgabe speziell ausgestaltetes Förderaggregat erforderlich. Dies aber bedingt einen verhältnismässig beträchtlichen Material- und Kostenaufwand für eine solche Vielzahl von Einzelförderern, der zudem häufig nur für verhältnismässig kurze Einsatzzeit erforderlich ist. In Zeiten nicht aufgabengemässer Nutzung müssen solche Förderer dann irgendwo zwischengelagert werden. Dies aber bringt einerseits die Notwendigkeit der Verfügbarkeit von entsprechendem Lagerraum mit den entsprechenden Wartungskosten für diesen und die abzustellenden Förderer und andererseits nutzungsmässiges Brachliegen von in solche Investitionsgüter investiertem Kapital mit entsprechender Steigerung der Gemeinkosten des Unternehmens und notwendigerweise ungünstiger Erhöhung des Abgabepreises der Produkte desselben mit sich.

Bei kurzfristig erkennbar werdender Notwendigkeit des Einsatzes bestimmter Ausführungen von Bandfördervorrichtungen sind erfahrungsgemäss diese häufig nicht rechtzeitig zu beschaffen, so dass es zu nicht unerheblichen Produktions- und/oder Distributionsausfällen kommen kann, die sich nicht selten nur durch den Einsatz kostenintensiver Alternativförderungen beheben lassen. Hierdurch ergeben sich gleichermassen ungünstige Auswirkungen nicht nur auf den Abgabepreis der Produkte des mit der Förderung befassten Unternehmens, sondern auch auf dessen Wettbewerbsfähigkeit und dessen Marktstellung überhaupt, da Gefahr für die Nichteinhaltung von Lieferterminen und damit das Entstehen von Regressansprüchen und/oder Konventionalstrafeverpflichtungen nicht auszuschliessen ist.

Zwar sind in Modulbauweise bzw. im Baukastensystem im Zuge eines Materialflusssystems mit anderen Fördervorrichtungen, wie z. B. Rollenbahnen, Röllchenbahnen, Umsetzern, Ausschleusern, Kreisförderern od. dgl., kombinierbare Bandfördervorrichtungen bekannt, jedoch bedeutet dies nur eine brauchbare Universalität der Kombinierbarkeit unterschiedlicher Arten von Fördervorrichtungen innerhalb eines Materialflusssystems zur Anpassung an bestimmte Förderaufgaben, nichts hingegen wird dadurch ausgesagt über Ort und Art der Erstellung solcher bekannter Bandfördervorrichtungen. Diese werden zwar aus den benötigten Einzelbauteilen, wie Rahmenlängsholmprofilen, Verschraubungen, Antriebsmotor, Antriebs- und Umlenkwalze sowie Fördermittel u. a. montiert, dies jedoch entsprechend den für jeden einzelnen Bedarfsfall vorher vom Kunden eingeholten Angaben bezüglich Einsatz- und Verwendungsart, Aufstellungsort und -art u. dgl. im Herstellerwerk, um dann in fertigmontiertem Zustand meist erst nach Absolvierung eines Probelaufes an den Abnehmer ausgeliefert zu werden. Hierdurch wird die Notwendigkeit verhältnismässig raumgreifender und material- und kostenaufwendiger Verpackung, nicht unerheblicher Lagerungs- und Versandkosten und der Vorhaltung entsprechenden Montageraums beim Hersteller bedingt.

Weiterhin ist durch die dem Gattungsbegriff des Patentanspruchs 1 entsprechende US-A-4 172 677 auch bereits ein Bausatz bekannt, bei dem die Rahmenlängsholmprofile als Sigma-Profile ausgebildet sind und für den Anschluss aller rahmenbildenden ebenso wie aller am Tragrahmen anzuschliessenden Bauteile bzw. Aggregate, wie einerseits beispielsweise der Aufgabewalze und Abgabewalze, der Standfüsse und andererseits beispielsweise der Querverbinder und der Gleitunterlage für das Obertrum des Fördermittels sowie für Antriebsmotor und andere Zusatzaggregate, wie etwa Gleit- oder Schlürleisten od. dgl., eine Vielzahl unterschiedlichster Zwischenelemente in Form von Haltelaschen, Verschraubungswinkeln u. dgl. – oder Blechverformungsausführung nebst zugehöriger Vielzahl von Verschraubungen vorgesehen ist. Dabei weisen die Sigma-Profile jeweils in der Mitte ihres Bodensteges, der notwendigerweise aus der Ebene der Anschlusszonen an ihre Seitenstege herausgebogen ist, und in den die Seitenstege verlängernden beiden Randstegen jeweils eine Reihe linienrastermässig angeordneter Löcher zur Aufnahme von Anschlussverschraubungen auf.

Bei dieser bekannten Bausatzausführung mit Sigma-Profilen für die Rahmenlängsholme werden die von diesen abzustützenden bzw. zu tragenden Bauteile im wesentlichen nicht im Bereich des Bodensteges der Sigma-Profile, sondern über die Löcher in den innenliegenden Randflanschen dieser Profile verschraubt. Dies ist insbesondere auch deswegen verständlich, weil die Rahmenkonstruktion bei diesem bekannten Bausatz keineswegs aus gegenüberliegenden Längsholmprofilen und Verbindungselementen in Form von Quertraversen gebildet ist, die auch auf Zug oder Torsion belastbar sind und demgemäss dem ganzen Rahmengebilde eine besondere Biege- und Torsionssteifigkeit vermitteln, sondern aus gegenüberliegenden Längsholmen mit verbindenden Zugankern mit Zugstange und Abstandshaltehülse. Eine solche Konstruktion benötigt natürlich zur Einleitung der betreffenden Zugspannungen die Abstützung gegenüber den Rahmenlängsholmen in den durch die Ausführung als Sigma-Profil verstärkten seitlichen Randbereichen von dessen bzw. deren innenliegenden Randflanschen.

Ausserdem wird bei diesem bekannten Bausatz eine Vielzahl von Zwischenteilen insbesondere für die Verbindung der einzelnen Bauteile miteinander in Form von speziell ausgebildeten und nicht unerheblichen Fertigungsaufwand erfordernden Guss- oder Blechformteilen benötigt.

Soll aus diesem bekannten Bausatz eine Bandfördervorrichtung erstellt werden, so ist stets ein Arbeiten vom Profilinneren her erforderlich, da wesentliche rahmenbildende Bauteile ihre Verschraubungsstellen im Lochungsbereich der Seitenflansche der Sigma-Profile haben. Zum Anschluss von rahmenbildenden Bauteilen an die gegenüberliegenden Rahmenlängsholm-Profile sind stets aus der Ebene gebogene Flanschelemente erforderlich. Sämtliche Bauteile sind mit den Rahmenlängsholmprofilen nur so zu verschrauben, dass stets Schraubenköpfe od.dgl. im Bereich der innenliegenden Seitenflansche der Sigma-Profile über diese vorstehen. Zwar wird bei dieser bekannten Bauart das Vorstehen der Schraubenköpfe od.dgl. nach aussen vermieden, so dass sich stets eine praktisch glatte Aussenoberfläche der betreffenden Profile am fertigen Bandförderer darbietet, jedoch wird dadurch die Möglichkeit der Nutzung der Seitflansche der Rahmenlängsholmprofile als Seitenführungen für Fördermittel und/oder Fördergut praktisch unmöglich gemacht. Insgesamt ist eine Bandförderer-Ausführung aus diesem bekannten Bausatz nicht nur von der Erstellung der einzelnen Bausatz-Einzelteile her verhältnismässig arbeits- und kostenaufwendig, sondern auch bei der Montage kaum für ungelerntes und verhältnismässig unerfahrenes Personal, wie beispielsweise nicht mit der Aufstellung von Maschinen od.dgl. befasste Betriebsschlosser, Hausmeister, Lageristen od.dgl., geeignet und erfordert selbst von geschultem und erfahrenem Fachpersonal besondere Aufmerksamkeit und Geschicklichkeit, ohne dass sich der für Montage und Demontage eines solchen Bandförderers erforderliche Arbeits- und Zeitaufwand und damit die Erstellungskosten wesentlich verringern liessen. Noch gravierender fallen diese Nachteile bei Demontage und Wiedermontage für Anpassungs- oder Austauscharbeiten einzelner Baugruppen oder Aggregate eines solchen bekannten Bandförderers ins Gewicht.

Der Erfindung liegt somit die Aufgabe zugrunde, eine Möglichkeit zu schaffen, unter Vermeidung der Nachteile bekannter Bandfördervorrichtungen und insbesondere des bekannten Bausatzes für deren Erstellung auch mit ungeschultem und sogar unerfahrenem, gegebenenfalls angelerntem Personal sich schnell und bequem und dabei doch besonders kostengünstig sowohl hinsichtlich des Anschaffungspreises als auch des Nutzungsgrades und insbesondere auch des Lagerungsaufwandes selbst kurzfristig auftretenden Änderungen der Förderbedingungen in einer Förderlinie bzw. einem Materialflusssystem so anpassen zu können, dass zuverlässig eine praktisch alle zu erwartenden Förderbedingungen befriedigende Universalität der Anpassungsmöglichkeiten trotz und mit einem Minimum an vorzuhaltendem maschinellem und Montageaufwand gewährleistet und Produktions- und/oder Distributionsunterbrechungen mit den gefürchteten entsprechenden Ausfall- bzw. Fördertotzeiten und -kosten weitestgehend ausgeschaltet werden, wobei sich ferner eine vergleichsweise Verbesserung der Möglichkeiten für Leichtbauweise durch Vermeidung von Beeinträchtigungen der Tragfähigkeit und Wiederstandsfähigkeit gegenüber Belastungen durch Schwächungen des Profilmaterials der Rahmenlängsholme ergeben und Beeinträchtigungen des Förderbetriebes und der Lebensdauer des Fördermittels durch Gefahrenstellen für das Auftreten von erhöhtem Verschleiss zwischen diesem und Teilen der Tragrahmenkonstruktion vermieden werden sollen.

Für die Lösung dieser vielgestaltigen Kombinationsaufgabe schlägt die Erfindung einen Bausatz gattungsgemässer Art vor, der sich dadurch kennzeichnet, dass die Rahmenlängsholme jeweils als U- oder C-Profil ausgebildet sind, in dessen ebenem Bodensteg in jeweils linienrastergleichem Lochabstand Löcher angeordnet sind, mittels derer mit den Rahmenlängsholmen zu verbindende Bauteile über mindestens zwei in entsprechendem Lochabstand angeordnete Löcher in jeweils mindestens einem in Anlage an dem Bodensteg des Rahmenlängsholms bringbaren Befestigungsflansch derselben durchgreifender Verschraubungen an den Rahmenlängsholmen festlegbar sind, und dass ein im Zusammenbauzustand von mindestens einem Rahmenlängsholm tragbarer Antriebsmotor mit Mitnahmeverbindung für das Fördermittel und mindestens einem Lagerschild, der in gleicher Weise am Bodensteg eines zugeordneten Rahmenlängsholms festlegbar ist, vorgesehen ist.

Es ist ersichtlich, dass sich gemäss der Konzeption der Erfindung bei Nutzung des Bausatzes derselben unerwartet eine Vielzahl von Vorteilen ergibt:

Die Rahmenlängsholmprofile weisen ausserhalb ihres Bodensteges keine zusätzlichen Lochreihen auf, was einer Arbeitseinsparung bei der Herstellung einsatzfähiger Rahmenlängsholmprofile und der Vergrösserung der Ausstosskapazität derselben pro Zeiteinheit mit entsprechender Kostensenkungsmöglichkeit sowie auch einer Vergrösserung der Festigkeitseigenschaften dieser Profile für eine vorgegebene Belastung des Tragrahmens und damit der Möglichkeit leichterer Bauweise positiv zugute kommt. Ein Arbeiten vom Profilinneren her ist bei einem Bausatz nach der Erfindung nicht erforderlich, was eine Vereinfachung und Erleichterung von Montage und Demontage und damit auch des zugehörigen Zeit- und Kostenaufwandes bedingt. Es sind weder spezielle Verbindungsmittel zwischen den einzelnen Teilen des Bausatzes mit Ausnahme grundsätzlich ebener Flansche oder Lagerschilde od.dgl. noch sonstige aus der Ebene gebogene Flanschelemente erforderlich. Dies bedeutet wiederum eine nicht unbeträchtliche Arbeitseinsparung bereits bei der Vorbereitung einsatzfähiger Bausatz-Einzelteile mit entsprechenden Kostenvorteilen. Störungen durch innen vorstehende Schraubenköpfe od.dgl. sind nicht zu befürchten, wodurch sich die Möglichkeit der Nutzung der Seitenflansche der Rahmenlängsholmprofile als Seitenführungen für Fördermittel und/oder Fördergut ergibt, so dass von dem Einsatz spezifisch hierfür vorgesehener und entsprechend ausgebildeter Bauteile mit entsprechenden Kostenvorteilen häufig Abstand genommen werden kann. Es ergibt sich eine übersichtliche Anordnung der Anbauteile, was einer erwünschten Erleichterung der Demontage und Wiedermontage für Anpassungs- oder Austauscharbeiten zugute kommt. Insgesamt gesehen lässt sich mit einem Bausatz nach der Erfindung für gleiche Belastung und Förderleistung ein vergleichsweise gewichtsmässig leichterer und somit auch aus diesem Grunde kostengünstigerer Bandförderer erstellen, da nicht nur die unerlässlichen Bauteile desselben aufgrund entsprechender Widerstandsmoments-Eigenschaften zufolge ihrer erfindungsspezifischen Konfiguration und Dimensionierung für gleiche Belastungswerte dünnwandiger bzw. gewichtsmässig leichter ausgeführt werden können, sondern aufgrund der erfindungsgemässen Konzeption des Anschlusses der einzelnen Bausatz-Einzelteile bzw. -Baugruppen bzw. Aggregate mit Anlagemöglichkeit am Bodensteg der Rahmenlängsholmprofile eine Vielzahl von spezifisch gusstechnisch ausgebildeten bzw. spanlos verformten Anschlussbauteilen (Fittings) in Fortfall kommt und nicht einmal die notwendigen Anschlussflansche bzw. Lagerschilde Ausbiegungen od.dgl. aus ihrer Ebene heraus aufweisen, die bekanntlich ihrerseits das Gewicht solcher Anschlussteile zu steigern pflegen. Es ist ersichtlich, dass gemäss der Konzeption der Erfindung Bandfördervorrichtungen nicht nur zu einem besonders attraktiven Einstandspreis zur Verfügung gestellt werden können, da deren Einzelteile im Herstellerwerk grossserienmässig hergestellt oder aber als meist sogar genormte Maschinenelemente handelsüblich jederzeit praktisch ohne Lieferschwierigkeiten erworben werden können, sondern dass auch dem Benutzer eines solchen Bausatzes nach der Erfindung eine bisher nicht gekannte Universalität der Anpassungsmöglichkeiten an unterschiedlichste Förderbedingungen an die Hand gegeben wird, die trotz ihrer grossen Variabilität zudem auch noch lediglich ein Minimum an Kapitalbindung erfordert.

Eine insbesondere im Hinblick auf spezielle Leichtbauweise besonders bewährte Weiterbildung der Erfindung kennzeichnet Anspruch 2.

Alternativ oder zusätzlich zu den Verbindungselementen gemäss Anspruch 2 kann auch mindestens ein als U-förmige Blechringe gemäss Anspruch 3 ausgebildetes Verbindungselement zweckmässig vorgesehen sein. Dieses kann vorzugsweise als Unfallschutz für den Laufspalt des Untertrums des Fördermittels im Bereich der Aufgabewalze(n) und/oder der Abgabewalze(n) Verwendung finden, falls erwünscht. Wird einem solchen Verbindungselement in Form einer U-förmigen Blechrinne eine Länge gemäss Anspruch 4 gegeben, so kann dieses spezifisch zur Erhöhung der Biege- und Torsionssteifigkeit des gesamten Rahmenbildes herangezogen werden, wobei sich hier die gewünschte Wirkung durch entsprechende Wahl der Zahl der Verschraubungen beeinflussen lässt. Erhält ein solches Verbindungselement eine Länge gemäss Anspruch 5, so kann es insbesondere bei der Erstellung von Bandförderern mit einem aus mehreren Paaren von Rahmenlängsholmen gebildeten Rahmengestell zweckmässig als die Stossstelle zwischen zwei Paaren von Rahmenlängsholmen übergreifende Verbindungslasche eingesetzt werden.

Für schwerere Ausführungen von Bandfördervorrichtungen empfiehlt sich eine Ausführung des Bausatzes gemäss Anspruch 7, welche eine auf höhere Belastung des Rahmengestells ausgelegte besondere Standfestigkeit berücksichtigt.

Für bestimmte Einsatzfälle hat es sich als zweckmässig erwiesen, wenn neben oder alternativ zu paarweise vorgesehenen Standfüssen gemäss Anspruch 8 einzeln stehende Standfüsse mit den Förderbandrahmen tragenden Querholmen vorgesehen sind. Insbesondere für Kleinbänder sowohl in Geradband- als auch in Knickbandausführung kann zweckmässig lediglich ein einziger solcher Standfuss ausreichen. Seine Einrichtung zur ortsfesten Festlegung kann entweder als Fussplatte oder aber auch als Standschemel ausgebildet sein, der vorzugsweise verfahrbar und/oder relativ zum Querholm höhenverstellbar sein kann. Insbesondere kann mit Vorzug gemäss Anspruch 11 eine Höhenverstellbarkeit durch teleskopische Ineinanderverschiebbarkeit wenigstens zweier Teile der Standpfeiler mindestens eines Paares von Standpfeilern oder der bzw. mindestens eines der einzelnen vorgesehenen Standpfeiler erbracht werden. Ungeachtet dessen, ob der Förderbandrahmen durch paarweise vorgesehene Standfüsse oder aber durch einzeln vorgesehene Standfüsse mit entsprechenden ihn tragenden Querholmen abzustützen ist, kann in weiterer zweckmässiger Fortbildung zur Erleichterung der Montage der Bausatz nach der Erfindung gemäss Anspruch 12 ausgebildet sein, wobei insbesondere auch schrägstehende Bandanordnungen mit ansteigender oder einfallender Förderung möglich sind.

Zur Steigerung der Universalität der Einsetzbarkeit eines mit einem Bausatz nach der Erfindung erstellten Bandförderers nach der Erfindung kann in weiterer zweckmässiger Fortbildung nach der Erfindung gleichfalls ungeachtet der Art der standfussmässigen Abstützung des Förderbandrahmens gemäss Anspruch 13 eine Möglichkeit für beliebige Einstellbarkeit der positiven oder negativen Förderneigung erreicht werden, wobei diese durchaus sogar während des laufenden Förderbetriebes möglich sein kann, sofern die mit einem solchen Bausatz nach diesem untergeordneten Erfindungsgedanken erstellte Bandfördervorrichtung entweder am Anfang oder Ende einer Förderlinie angeordnet ist oder aber das nachgeschaltete Förderaggregat auch bei aufgrund geänderter Förderneigung verändertem Anförderungsniveau das Fördergut zu übernehmen oder aber die mit dieser Ausführung eines Bausatzes nach der Erfindung erstellte Bandfördervorrichtung nach veränderter Einstellung ihrer Förderneigung das Fördergut von dem vorgeschalteten Förderaggregat noch zu übernehmen vermag.

Im übrigen kann bzw. können mit Vorteil die Aufgabewalze(n) oder die Abgabewalze(n) als Antriebswalze(n) ausgebildet sein. Hierfür kann mit Vorzug der Bausatz so ausgebildet sein, dass die Walzenträger der als Antriebswalze(n) dienenden Aufgabe- bzw. Abgabewalze(n) gemäss Anspruch 15 rahmengestellfest festlegbar sind.

Speziell bewährt hat sich aber auch eine Alternative hierzu, gemäss welcher der Bausatz nach der Erfindung im Sinne von Anspruch 16 so ausgebildet ist, dass jeweils die Walzenträger der Aufgabewalze(n) und/oder die Walzenträger der Abgabewalze(n) in Relation zum Förderbandrahmen verstellbar und in der jeweils gewünschten Arbeitsstellung festlegbar sind. Diese Ausführungsform der Erfindung hat den Vorteil, dass sich hierdurch nicht nur Nachjustierungen der Arbeitsspannung des Fördermittels (z.B. Bandspannung) erzielen lassen, die auch in anderer Weise erreicht werden könnten, sondern – was von viel grösserer Wichtigkeit ist – ortsmässige Anpassungen der lagemässigen Zuordnung der Übernahme- und/oder der Übergabestelle der Bandfördervorrichtung für das Fördergut vom vorgeschalteten Förderaggregat bzw. an das nachgeschaltete Förderaggregat. Eine sowohl konstruktiv als auch fertigungstechnisch besonders einfache und im Betrieb besonders zuverlässige Ausführungsform eines Bausatzes für speziell diesen Zweck ergibt sich gemäss Anspruch 17.

Insbesondere dann, wenn es erforderlich ist, die Übernahme- und/oder Abgabestelle für das Fördergut örtlich nicht zu verändern, andererseits dabei aber aufgrund beispielsweise geänderter spezifischer Fördergutbelastung und/oder Fördergeschwindigkeit die Spannung des Fördermittels (z.B. Bandspannung) zu verändern, da ja bekanntlich die spezifische Fördergutbelastung eines Bandförderers und die Fördergeschwindigkeit in einer funktionsmässigen Abhängigkeit mit der Bandspannung stehen, kann nach einem untergeordneten Erfindungsgedanken gemäss Anspruch 18 eine Möglichkeit vorgegeben werden, die Fördermittelspannung bei konstant gehaltenem Längenendmass der Bandfördervorrichtung in gewünschter Weise zu verändern. Zweckmässig kann hierzu im übrigen Anspruch 19 beitragen. Konstruktiv kann zweckmässig diese Aufgabe gemäss einer der drei Alternativvariationen von Anspruch 20 besonders einfach und kostengünstig gelöst werden, wobei der dabei letztgenannten Variante von Lagerschilden für die Antriebswelle mit jeweils zwei Lagerungseinrichtungen für der bzw. den Antriebswalze(n) zugeordnete Umlenkwalzen bzw. Umlenkwalzenpaare meist der Vorzug zu geben sein dürfte.

Für den Fall der beabsichtigten Erstellung eines Knickbandförderers mittels der durch den Bausatz nach der Erfindung vorgegebenen Bauteile kann gemäss einem weiteren untergeordneten Erfindungsgedanken mindestens eine Umlenkeinrichtung für das Fördermittel mit jeweils einem Paar von Lagerträgern für die Achsen einer oder mehrerer Umlenkwalze(n) für das Unter- oder Obertrum des Fördermittels sowie einer oder mehrerer Niederhalterolle(n) für das andere Trum desselben vorgesehen sein, die jeweils zwei Schenkel aufweisen, von denen im Zusammenbauzustand jeweils einer an einem Rahmenlängsholm und der andere am in Förderrichtung folgenden Rahmenlängsholm abstützbar ist. Eine konstruktiv und fertigungstechnisch besonders einfache und entsprechend kostengünstige Ausführung dieses Erfindungsgedankens ergibt sich gemäss Anspruch 22. Grundsätzlich kann im Rahmen der Erfindung ein bestimmtes Winkelmass der Neigungsänderung von einem Zweig zum anderen des mit einem Bausatz nach der Erfindung erstellbaren Knickbandförderers fest vorgegeben sein, jedoch gibt es erfahrungsgemäss sowohl betriebstechnisch, als auch bereits aus infestitionsmässigen Gesichtspunkten gewichtige Gründe dafür, bei einer mit einem Bausatz nach der Erfindung erstellten Bandfördervorrichtung die Förderneigung von einem Zweig zum anderen variabel halten zu können, wobei dies tunlichst sogar während des Förderbetriebes möglich sein sollte. Diese Aufgabe wird gemäss Anspruch 23 dadurch gelöst, dass die Schenkel beider Lagerträger mindestens einer Umlenkeinrichtung in ihrer Winkelstellung zueinander veränderbar sind.

Soll die Zuordnung der Schenkel der Lagerträger zu dem jeweils zugeordneten Rahmenlängsholm fest sein, so kann in weiterer Fortbildung der Erfindung zweckmässig der Bausatz gemäss Anspruch 24 ausgebildet sein. Andererseits hat sich aber auch eine Alternative hierzu sowohl aus konstruktiven als auch aus fertigungstechnischen Gründen besonders bewährt, bei der die Lagerträger gemäss Anspruch 25 ausgebildet sind. Dabei kann in weiterer zweckmässiger Fortbildung zur Erzielung eigenständiger Spannwirkung im Bereich der Umlenkstelle (Knickstelle) des mit einem Bausatz nach der Erfindung zu erstellenden Bandförderers dieser Bausatz gemäss Anspruch 26 ausgebildet sein.

Insbesondere dann, wenn ein Bandförderer nach der Erfindung mit besonders steiler Förderneigung, und zwar dabei starkem Einfallen entsprechender grosser negativer Neigung zum Einsatz kommen soll, kann es sich als besonders zweckmässig erweisen, wenn in weiterer Vervollkommnung der Erfindung gemäss Anspruch 27 ein Stützhorn oder vorzugsweise ein Paar von Stützhörnern vorgesehen ist.

Ferner hat die Praxis erwiesen, dass für vielfältige Förderaufgaben es zu bevorzugen ist, wenn in weiterer Vervollkommnung der Erfindung der Bausatz gemäss Anspruch 28 für die Bereitstellung mindestens einer Gleitleiste, vorzugsweise eines Paares solcher Leisten, vorgesehen und ausgerüstet ist.

Für manche Fördergüter kann es zweckmässig sein, wenn ein gemäss Anspruch 29 vervollkommneter Bausatz nach der Erfindung die Möglichkeit für einen Aufgabetrichter vorsieht. Gleichermassen kann ein Bausatz nach der Erfindung in weiterer Vervollkommnung gemäss Anspruch 30 auch die Möglichkeit für eine Abgabeschurre bieten. Für den Fall von mit einem Bausatz nach der Erfindung zu erstellenden Knickbandförderern kann ferner eine Möglichkeit für den Einsatz einer Übergangsschurre gemäss Anspruch 31 von wesentlichem Vorteil sein.

Anders als für Schüttgüter kann es insbesondere für zu fördernde Stückgüter zu bevorzugen sein, wenn statt eines Aufgabe- und/oder eines Abgabetrichters ein Bausatz nach der Erfindung insbesondere im Interesse einer Steigerung der Universalität seiner Einsatzmöglichkeiten gemäss Anspruch 32 für die Erstellung eines Bandförderers mit mindestens einer Aufgabeschlürwand und/oder mindestens einer Abgabeschlürwand, vorzugsweise in jedem Fall einem Paar solcher Aufgabe- bzw. Abgabeschlürwände, ausgerüstet ist. Für den Fall, dass der Bausatz nach der Erfindung für die Erstellung eines Knickbandförderers vorgesehen sein sollte, kann ferner zum gleichen Zweck vorteilhaft eine Übergangsschlürwand, vorzugsweise ein Paar solcher Übergangsschlürwände, gemäss Anspruch 33 vorgesehen sein.

In weiterer Vervollkommnung der Erfindung kann ferner auch für die Nutzung eines Steuerpultes für den Antriebsmotor gemäss Anspruch 34 Sorge getragen werden.

Für manche Fördereinsätze kann es erwünscht sein, dem Untertrum des Fördermittels eine Führung über eine oder mehrere Führungswalzen zu vermitteln. Für einen solchen Fall kann in weiterer vorteilhafter Fortbildung der Erfindung der Bausatz gemäss Anspruch 35 ausgebildet sein.

Im folgenden wird die Erfindung anhand zweier Ausführungsbeispiele, die in den Zeichnungen jeweils in auseinandergezogener Darstellung wiedergegeben sind, rein beispielsweise näher erläutert. Dabei zeigen:

Fig. 1 die Bauteile eines Bausatzes nach der Erfindung für die Erstellung eines Geradförderers, und

Fig. 2 in der Darstellung gemäss Fig. 1 entsprechender Darstellung einen Bausatz nach der Erfindung für die Erstellung eines Knickbandförderers.

Wie dargestellt, ist für die Bildung des Förderbandrahmens ein Paar von Rahmenlängsholmen 2 aus C-Profilmaterial mit ebenem Bodensteg 2a und zu diesem parallelen oder aber leicht auf diesen zu geneigten Randstegen 2b vorgesehen. Diese Rahmenlängsholme weisen auf der Mittellinie m ihres Bodensteges 2a eine Vielzahl in gleichem Abstand zueinander angeordneter Löcher 3 auf, die hier als Rundlöcher ausgebildet sind, aber auch als beispielsweise Langlöcher mit in der oder wenigstens quer zur Richtung der Rasterlinie m gleicher Grösse ausgebildet sein könnten.

Zum Zusammenhalt beider Rahmenlängsholme 2 eines Paares derselben sind mehrere Verbindungselemente 4 vorgesehen, die hier als Abschnitte gleicher Länge von Rechteckrohrmaterial ausgebildet sind, an derer beiden Enden jeweils ein sich etwa achsnormal wegerstreckender Randflansch 33 vorgesehen ist, der jeweils zwei Löcher 6 etwa gleicher Grösse wie der der Löcher 3 der Rahmenlängsholme 2 aufweist, die in einem dem Lochabstand zweier Löcher 3 der Rahmenlängsholme 2 entsprechenden Lochabstand zueinander angeordnet sind, der jedoch nicht notwendigerweise dem Lochabstand zweier benachbarter Löcher 3 der Rahmenlängsholme 2 zu entsprechen braucht, sondern auch einem Vielfachen desselben, wie im vorliegenden Fall dem Doppelten, entsprechen kann. Für die Verbindung der Querholme 4 mit den beidseitig anzuschliessenden Rahmenlängsholmen 2 sind Verschraubungen 28 vorgesehen, die mit Vorzug aus Schraubbolzen, Mutter mit Unterlegscheibe und ggf. Kontermutter bestehen können.

Der so gebildete Förderbandrahmen der als Ganzes mit 1 bezeichneten Bandfördervorrichtung wird von einem Paar von Standfüssen 9 getragen, die jeweils aus einem Paar von Standpfeilern 32 gebildet sind, welche durch zwei Querholme 45 miteinander verbunden sind, die ähnlich wie die Querholme 4 als Abschnitte von Rundrohr- oder Rechteckrohrmaterial ausgebildet sein können und an deren Stirnenden jeweils Anschlussflansche 46 beispielsweise durch Schweissen festgelegt sind, die Löcher 46 aufweisen, welche mit entsprechenden Löchern in den Standpfeilern 32 fluchten, so dass mittels Verschraubungen 85 ein biege- und torsionssteifer Standfuss 9 aus Standpfeilern 32 und Querholmen 45 gebildet werden kann. Dabei können die Standpfeiler 32 entweder einstückig ausgebildet sein, wie bei dem rechten Standfuss 9 dargestellt, oder aber aus mehreren Teilstücken 32a, 32b, 32c zusammengesetzt sein, die teleskopisch ineinander einführbar sind, wie bei dem einen Standpfeiler des linken Standfusses 9 dargestellt. Die Standpfeiler können aus Rechteckrohr und/oder aus einem anderen Profilmaterial, wie beispielsweise einem C-Profil 32c, erstellt sein, wie dargestellt. Zur Verbindung einzelner Teilstücke eines Standpfeilers 32 können in dessen Inneres einführbare Laschen 86 vorgesehen sein, welche als Klemmplatten oder Widerlager für entsprechende zwar angedeutete, nicht jedoch näher dargestellte Verschraubungen dienen. Eine Ausführung mit aus mindestens zwei gegeneinander teleskopierbaren Teilen gebildeten Standpfeilern 32 wird immer dort vorzusehen sein, wo es gilt, ohne Austausch der Standfüsse 9 gegen andere die Förderneigung der Bandfördervorrichtung 1 zu verändern. Die Standpfeiler 32 selbst weisen an ihren unteren Enden jeweils Fussplatten 43 auf.

Zur Anpassung an eine bei Veränderung der Förderneigung der Bandfördervorrichtung 1 notwendigerweise auftretende Änderung der relativen Winkelstellung von Förderbandrahmen und Standpfeilern 32 sind Schwenkflansche 47 vorgesehen, von denen jeweils einer einem Standpfeiler 32 zugeordnet ist und die längs ihres oberen Randes eine Anzahl von Löchern 48 etwa gleicher Grösse wie der der Löcher 3 der Längsholme 2 aufweisen, welche in gleicher Rasteranordnung wie letztere vorgesehen sind, so dass die Schwenkflansche 47 über gleichfalls wiederum mit Vorzug aus Schraubbolzen, Mutter mit Unterlegscheibe und ggf. Kontermutter bestehende Verschraubungen 28 an beliebiger geeigneter Stelle der Rahmenlängsholme 2 festgelegt werden können. Die Schwenkflansche 47 weisen jeweils weiterhin ein Loch 49 und einen zu diesem konzentrischen kreisbogenförmigen Schlitz 50 auf, wobei der dem Krümmungsradius desselben entsprechende Abstand zum Mittelpunktsloch 49 dem Abstand zweier Flanschlöcher 13 in jeweils einem am oberen Ende eines jeden Standpfeilers 32 durch Verschraubung festlegbaren Anschlussflansch 11 entsprechen. Durch das Mittelpunktsloch 49 des Schwenkflansches 47 und das obere Loch 13 des Anschlussflansches 11 greift ein als Schwenklager dienender Schraubbolzen 51 hindurch, der mittels Mutter mit Unterlegscheibe und gegebenenfalls Kontermutter, erforderlichenfalls unter Zuhilfenahme einer Klemmplatte, festgelegt werden kann. Durch den kreisbogenförmigen Schlitz 50 des Schwenkflansches 47 und das untere Loch 13 des Anschlussflansches 11 greift eine Feststellverschraubung 52 hindurch, mittels derer der Schwenkflansch 47 und mit ihm der Förderbandrahmen in jeder beliebigen Schwenkstellung, die der Länge des Kreisbogenschlitzes entspricht, festlegbar ist.

An der rechts unten gezeigten Aufgabestelle für das Fördergut ist eine praktisch über der ganzen Breite des Förderbandrahmens durchgehende Aufgabewalze 20 mit einer Achse 21 vorgesehen, die unter Zwischenschaltung von zwar dargestellten, nicht jedoch näher bezeichneten Distanzringen und Zwischenlegscheiben von einem Paar von Walzenträgern 15 abgestützt wird, von denen jeder auf seiner aufgabewalzenwellen- bzw. achsenfernen Seite ein Endstück 17 aufweist, das so konturiert ist, dass es in den Profilhohlraum des zugeordneten Rahmenlängsholmprofils 2 einführbar ist. Die Wellenträger 15 weisen ferner jeweils eine Nase 16 mit einem zwar dargestellten, nicht jedoch näher bezeichneten Gewindeloch auf, in das ein Gewindestift 19 einer durch diesen und die Nase 16 mit ihrem Gewindeloch gebildeten Spanneinrichtung für die Aufgabewalzenachse 21 einschraubbar und mittels einer zwar dargestellten, nicht jedoch näher bezeichneten Kontermutter in einer beliebigen gewünschten Arbeitsstellung festlegbar ist. Dabei kann sich der Gewindestift mit seinem freien Ende unmittelbar oder aber unter Zwischenschaltung eines gegenüber ihm frei drehbaren Druckstückes (nicht gezeigt) an der Aufgabewalzenachse 21 in Anlage befinden. Beim dargestellten Ausführungsbeispiel weist der Gewindestift 19 an seinem freien Ende einen fest an ihm angeordneten Aufnahmering für die Aufgabewalzenachse 21 auf, die sich in diesem drehen kann oder aber, sofern die gesamte Aufgabewalzenanordnung 20, 21 als Steckachsanordnung ausgebildet ist, mittels einer zwar dargestellten, nicht jedoch näher bezeichneten Madenschraube, die den Aufnahmering über eine Gewindebohrung in diesem durchdringt, an diesem drehfest festgelegt sein kann. Beim dargestellten Ausführungsbeispiel ist das Loch in der Nase 16 des Walzenträgers 15 nicht als Gewindeloch, sondern als Durchsteckloch für den Gewindestift 9 ausgebildet, der in dieses einfach eingesteckt wird. Der Achsabstand der Aufgabewalzenachse 21 zum Stirnende des zugeordneten Rahmenlängsholmprofils 2, an dem die Nase 16 des im Zusammenbauzustand in dessen Profilhohlraum mit seinem Endstück 17 eingeführten Walzenträgers 15 sich in Anlage befindet, wird durch Betätigung der zwar dargestellten, nicht jedoch näher bezeichneten Stellmutter des Gewindestiftes 19 in beliebiger gewünschter Arbeitsstellung eingestellt und fixiert. Zur Festlegung der Walzenträger 15 an den zugeordneten Rahmenlängsholmprofilen 2 weisen die Endstücke 17 der Walzenträger 15 jeweils einen im Zusammenbauzustand symmetrisch zur Rasterlinie m (Mittellinie des Bodensteges 2a der Rahmenlängsholmprofile 2 und vorzugsweise auch der Endstücke 17 der Walzenträger 15) angeordneten Sackschlitz 18 auf. Die Fixierung erfolgt dann mittels mindestens zweier durch Löcher 3 in den Rahmenlängsholmen 2 und den Sackschlitz 18 des in dessen Profilhohlraum eingeführten Walzenträgers 15 hindurchgreifender Verschraubungen 28 erforderlichenfalls unter Zuhilfenahme einer Klemmplatte 30, wobei auch hier diese Verschraubungen 28 mit Vorzug aus einem Schraubbolzen und Mutter mit Unterlegscheibe sowie gegebenenfalls einer Kontermutter bestehen können. Wie dargestellt, kann dabei gleichzeitig auch ein Stützhorn 64 mitfestgelegt werden, das längs seines oberen Randes mindestens zwei Löcher 65 etwa gleicher Grösse wie der der Löcher 3 der Rahmenlängsholme in der Rasteranordnung derselben entsprechender Anordnung aufweist. Andererseits kann ein solches Stützhorn, das im übrigen bevorzugt paarweise an beiden Rahmenlängsholmen 2 vorgesehen wird, auch an anderer Stelle und unabhängig von der Fixierung des Walzenträgers 15 am Rahmenlängsholm 2 festgelegt werden.

Am anderen Ende des Förderbandrahmens ist eine gleichfalls über praktisch dessen gesamter Breite durchgehende Abgabewalze 40 mit ihrer Welle 41 unter Zwischenschaltung von zwar dargestellten, nicht jedoch näher bezeichneten Lagern in einem Paar von Abgabewalzenträgern 35 abgestützt, die jeweils auf ihrer abgabewalzenfernen Seite ein Endstück 37 aufweisen, mit welchem sie im Zusammenbauzustand in den Profilhohlraum des zugeordneten Längsholms 2 eingeführt sind, gegenüber dessen Stirnseite sie sich mit einer Nase 36 abstützen. Da die Abgabewalze 40 beim dargestellten Ausführungsbeispiel als Antriebswalze für das sich in Förderrichtung F bewegende, über sie und die Aufgabewalze 20 gespannte Fördermittel in Form eines Bandes 27 ausgebildet ist, weisen die damit als Antriebswalzenträger dienenden Abgabewalzenträger 35 anders als die Aufgabewalzenträger 15 kein nach aussen offenes Aufnahmemaul für die betreffende Welle bzw. Achse auf, sondern eine geschlossene Lageraufnahme, wie dargestellt. Andererseits sind die Endstücke 37 der Walzenträger 35 in der gleichen Weise mit einem Sackschlitz 38 ausgestattet, wie für die Endstücke 17 der Walzenträger 15 vorstehend beschrieben. Die Festlegung der Walzenträger 35 an den zugeordneten Längsholmprofilen 2 erfolgt in der gleichen Weise, wie im Zusammenhang mit den Aufgabewalzenträgern 15 bereits beschrieben, mittels Verschraubungen 28, erforderlichenfalls unter Zuhilfenahme einer Klemmplatte 30.

Zur Erzielung einer von der Stellung der Aufgabewalze 20, die durch die Spanneinrichtung 16, 19 bestimmt wird, wie vorstehend bereits beschrieben, und einer damit erzielten Spannwirkung für das Fördermittel 27 unabhängigen weiteren Spannmöglichkeit im Bereich der Antriebswalze 40 weist jeweils die Nase 36 von deren Walzenträger 35 eine Gewindebohrung auf, in welche ein Gewindestift 39 eingeschraubt wird, der sich mit seinem rahmenlängsholmseitigen Ende an einer entsprechenden Anschlagfläche am Rahmenlängsholm 2, wie etwa einem zusätzlich zum Endstück 37 des Walzenträgers 35 in dessen Profilhohlraum geschobenen Stützwinkel 94, abstützt und durch mehr oder weniger weites Einschrauben die Achsstellung der Abgabewalzenwelle 41 relativ zur Stirnfläche des zugeordneten Rahmenlängsholms 2 bestimmt.

Am einen Rahmenlängsholm 2 ist ferner ein Lagerschild 24 für einen Antriebsmotor 22 festgelegt, und zwar dies mittels durch in der Rasteranordnung der Löcher 3 im Rahmenlängsholm 2 entsprechender Anordnung vorgesehene Löcher 26 etwa gleicher Grösse wie der der Löcher 3 des Rahmenlängsholms 2 hindurchgreifender Verschraubungen 28, welche gleichfalls wiederum mit Vorzug aus Schraubbolzen, Mutter und Unterlegscheibe und gegebenenfalls Kontermutter, erforderlichenfalls zusätzlich einer Klemmplatte 30, bestehen können. Am Lagerschild 24 ist mittels durch in der Anordnung des Bohrungsbildes des Standflansches 22a des Antriebsmotors 22 entsprechender Anordnung vorgesehene Motorbefestigungslöcher 25 hindurchgreifender Verschraubungen 29 der als Getriebemotor ausgebildete Antriebsmotor 22 festgelegt. Auf dessen Abtriebswelle ist, wie angedeutet, das zwar dargestellte, nicht jedoch näher bezeichnete Antriebsritzel eines als Kettentrieb ausgebildeten kinematischen Antriebskettenzuges 23 aufgekeilt, dessen Abtriebsritzel mit der als Antriebswelle fungierenden Welle 41 der Abgabewalze 40 drehfest verbunden ist. Durch diese Anordnung erhält ersichtlich die Spanneinrichtung 36, 39 für die Abgabewalze 40 gleichzeitig auch die Funktion einer Spanneinrichtung für den kinematischen Antriebskettenzug 23, mittels welcher dessen Kettenspannung auf das gewünschte Mass gebracht werden kann, obgleich natürlich nicht die gleichfalls vorhandene Funktion der Spanneinrichtung 36, 39 übersehen werden darf, die gesamte Bandfördervorrichtung 1 hinsichtlich ihrer Abgabestelle erforderlichenfalls abstandsmässig an ein etwa vorhandenes nachfolgendes Förderaggregat anzupassen. Weiterhin sind auch noch die beiden Teilstücke 86 und 87 des den Kettentrieb 23 abdeckenden Kettenkastens mit ihren zugehörigen Verschraubungen dargestellt, von denen die eine stirnseitig in ein nicht dargestelltes Sackloch des Walzenträger 35 eingreifen kann.

Dem Lagerschild 24 benachbart ist ein weiterer Lagerschild 80 für ein Steuerpult 79 für den Antriebsmotor 22 dargestellt, das mindestens zwei in der Rasteranordnung der Löcher 3 der Rahmenlängsholme 2 entsprechender Anordnung vorgesehene Löcher 81 etwa gleicher Grösse wie der der Löcher 3 der Rahmenlängsholme 2 aufweist und über Verschraubungen 28, die wiederum mit Vorzug aus Schraubbolzen, Mutter mit Unterlegscheibe und Kontermutter bestehen können, am Rahmenlängsholm 2 festlegbar ist. Mittels durch weitere Löcher 82 hindurchgreifender Verschraubungen 83 ist an diesem Lagerschild 80 das Steuerpult 79 festgelegt.

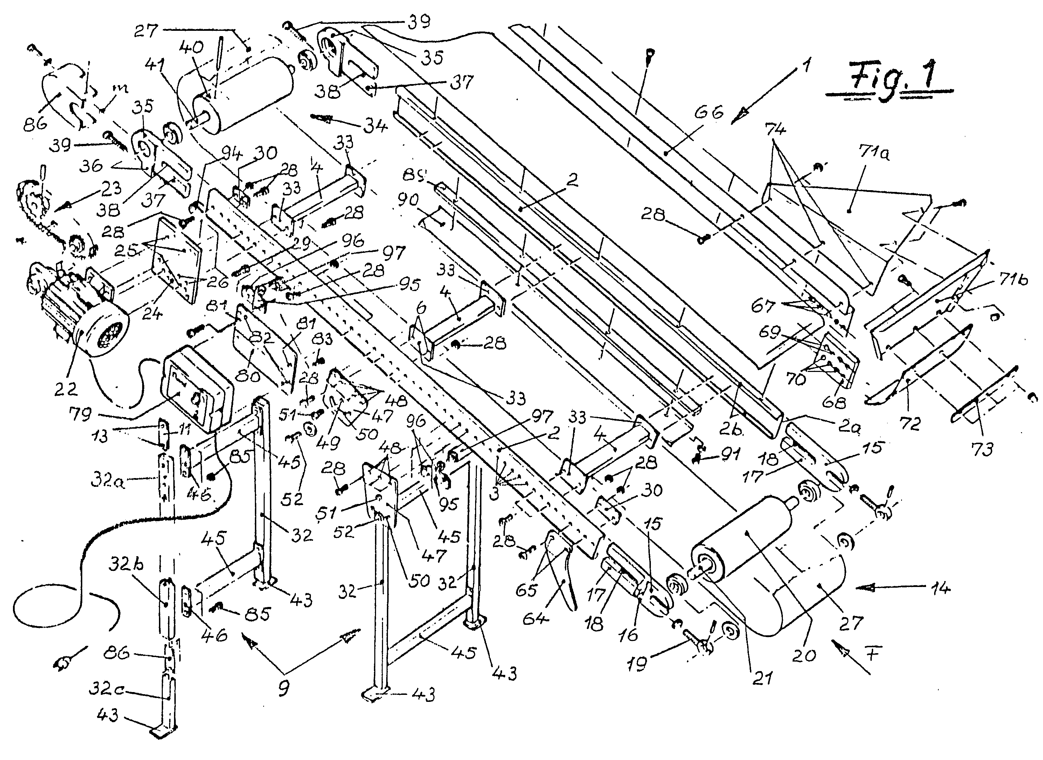

Weiterhin sind in Fig. 1 die einen Lagerschilde zweier Paare von Lagerschilden 95 für Führungswalzen 97 für das Untertrum des Fördermittels 27 dargestellt, welche jeweils eine Aufnahmebohrung 98 für die Achse der zugeordneten Führungswalze 97 und längs ihres oberen Randes jeweils mindestens zwei in der Rasteranordnung der Löcher 3 der Rahmenlängsholme 2 entsprechender Anordnung vorgesehene Löcher 96 etwa gleicher Grösse wie der der Löcher 3 der Rahmenlängsholme 2 aufweisen, über die sie mit den Rahmenlängsholmen 2 mittels wiederum mit Vorzug aus Schraubbolzen, Mutter mit Unterlegscheibe und gegebenenfalls Kontermutter bestehender Verschraubungen 28 (nicht dargestellt) an beliebiger für wünschenswert oder erforderlich erachteter Arbeitsstelle verbunden werden können.

Weiterhin zeigt Fig. 1 auch noch einen Aufgabetrichter 71, der aus mehreren Teilstücken 71a, 71b zusammengesetzt sein kann und an der Aufgabestelle für das Fördergut oberhalb des Förderbandrahmens anzuordnen ist, indem die unteren Bereiche seiner den Rahmenlängsholmen 2 zugeordneten Teilstücke 71a (von denen nur eines gezeigt ist) jeweils in der Anordnung der Löcher 3 der Rahmenlängsholme 2 entsprechender Anordnung vorgesehen Löcher 74 aufweisen, über welche sie mittels Verschraubungen 28, die gleichfalls mit Vorzug aus Schraubbolzen, Mutter mit Unterlegscheibe und gegebenenfalls Kontermutter bestehen können, mit dem zugeordneten Rahmenlängsholm 2 in bereits beschriebener Weise verbunden werden können, so dass der gesamte Aufgabetrichter 71 von den beiden gegenüberliegenden Rahmenlängsholmen 2 getragen wird. Weiterhin kann das Stirnteil 71b des Aufnahmetrichters 71 ein Abdeckblech 72 für die Aufgabewalze 20 tragen, indem dieses mittels einer Klemmleiste 73 und zwar dargestellte, nicht jedoch näher bezeichnete Verschraubungen am Bauteil 71b festgelegt ist. Ein solcher Aufgabetrichter 71 wird für Schüttgut als Fördergut zu bevorzugen sein. Ist Stückgut als Fördergut zu handhaben, so wird sich meist ein Aufgabeschlürblech (nicht dargestellt) als seitliche Begrenzung der Aufgabestelle für das Fördergut empfehlen.

Das Ausführungsbeispiel eines Bausatzes nach der Erfindung gemäss Fig. 1 sieht ferner Seitenbegrenzungsleisten 66 für das auf dem Obertrum des Fördermittels 27 geförderte Fördergut vor, von denen lediglich eine dargestellt ist. Sie ist, wie angedeutet, als Winkelprofil ausgebildet, und in ihrem nach unten weisenden Flansch sind Löcher 67 vorgesehen. Hat dieser nach unten weisende Flansch der Seitenbegrenzungsleiste 66 eine ausreichende Breite, so kann er für die Befestigung der Seitenbegrenzungsleiste 66 unmittelbar am zugeordneten Rahmenlängsholm 2 vorgesehen sein, indem die Löcher 67 in einer Vielzahl und in der Rasteranordnung der Löcher 3 im Rahmenlängsholm 2 entsprechender Anordnung sowie mit etwa gleicher Grösse der Löcher 3 der Rahmenlängsholme 2 vorgesehen sind. Die Festlegung an den Rahmenlängsholmen 2 erfolgt dann in bereits beschriebener Weise mittels Verschraubungen 28. Liegt jedoch das Obertrum des Fördermittels 27 um ein solches Mass oberhalb der Rasterlinie m, dass die Breite des sich nach unten erstreckenden Flansches der Seitenbegrenzungsleiste 66 für eine unmittelbare Festlegung nicht ausreicht, so können die Löcher 67 in gleicher oder anderer Anordnung vorgesehen sein. In einem solchen Falle wird nämlich je Seitenbegrenzungsleiste 66 mindestens ein Paar von Tragflanschen 68 vorgesehen, von denen lediglich einer dargestellt ist. Diese weisen dann der Anordnung der Löcher 67 entsprechend angeordnete Löcher 69 auf, über die der Tragflansch 68 mit der Seitenbegrenzungsleiste 66 verbunden werden kann. Weiterhin weist aber jeder Tragflansch 68 auch noch mindestens zwei in der Rasteranordnung der Löcher 3 der Rahmenlängsholme entsprechender Anordnung vorgesehene Löcher 70 etwa gleicher Grösse wie die Löcher 3 der Rahmenlängsholme 2 auf, über die der Tragflansch 68 in vorstehend bereits vielfach beschriebener Weise mittels Verschraubungen 28 (nicht dargestellt) am zugeordneten Rahmenlängsholm 2 so festgelegt werden kann, dass die Seitenbegrenzungsleiste 66 in richtiger Zuordnung zum Obertrum des Fördermittels 27 ihre Arbeitsstellung einnimmt.

Für manche Fördereinsätze ist es erwünscht, wenn das Obertrum des Fördermittels 27 über seiner gesamten Arbeitslänge kontinuierlich von seiner Unterseite her unterstützt wird. Hierfür kann ein Stützblech 88 vorgesehen sein, das vom Förderbandrahmen getragen wird, indem es längs seiner beiden Randkanten jeweils auf einer Tragleiste 90 ruht, die unter Zwischenschaltung einer ausreichendes Laufspiel für das Obertrum des Fördermittels 27 gewährleistenden Distanzleiste 89 mittels Verschraubungen 91 von unten her an dem oberen Seitensteg des Rahmenlängsholmprofils 2 und/oder mit Vorzug dem zu diesem parallelliegenden Mittelbereich des Profils der Seitenbegrenzungsleiste 66 verschraubt wird.

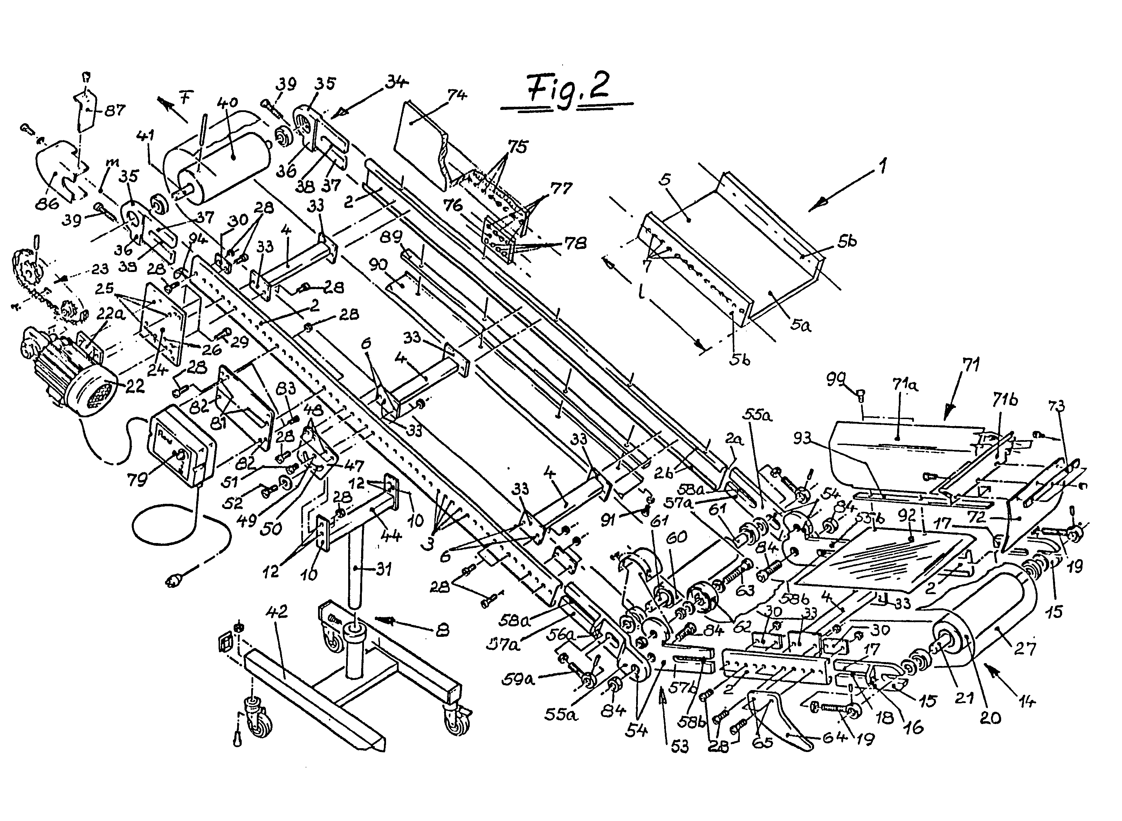

Das Ausführungsbeispiel gemäss Fig. 2 ist im wesentlichen in der gleichen Weise ausgeführt wie das gemäss Fig. 1, so dass auf die vorstehende Beschreibung des letzteren Bezug genommen werden kann und lediglich hiervon abweichende Einzelheiten des Ausführungsbeispiels gemäss Fig. 2 im folgenden näher erläutert werden.

Erst einmal ist darauf hinzuweisen, dass alternativ oder zusätzlich zu den Querholmen 4 bereits beschriebener Ausbildung mindestens ein Verbindungselement 5 in Form einer U-förmigen Rinne mit von ihrem Mittelsteg 5a sich gleichsinnig etwa normal wegerstreckenden Randstegen 5b vorgesehen sein kann, dessen Gesamtbreite so gewählt ist, dass sie gerade dem Abstandsmass der Innenflächen oder der Aussenflächen der sich im Zusammenbauzustand gegenüberliegenden Rahmenlängsholme 2 entspricht. In den Randstegen 5b sind jeweils mindestens zwei Löcher 7 etwa gleicher Grösse wie der der Löcher 3 der Rahmenlängsholme 2 mit deren Rasteranordnung entsprechender Anordnung vorgesehen, so dass mittels Verschraubungen 28 in vorstehend bereits vielfach beschriebener Weise das jeweilige Verbindungselement 5 in den Verbund des Förderbandrahmens eingefügt werden kann. Die Länge l des U-rinnenförmigen Verbindungselementes 5 kann dabei etwa der Länge der Rahmenlängsholme 2 entsprechen. In einem solchen Falle werden die Querholme 4 entbehrlich, zumal durch ein solches Verbindungselement 5 dem Förderbandrahmen eine erheblich grössere Biege- und/oder Torsionssteifigkeit vermittelt wird. Entbehrlich werden die Querholme 4 aber auch bei Verwendung von Verbindungselementen 5 beschriebener Art mit geringerer Länge l. Neben der Ausnutzung seiner Aussteifungsfunktion kann ein U-rinnenförmiges Verbindungselement 5 aber auch noch so eingesetzt werden, dass es zur Erfüllung von Unfallverhütungsvorschriften gleichzeitig auch noch als Eingreifschutz für den aufgabe- bzw. abgabewalzenseitigen Bereich des Untertrums des Fördermittels 27 dient. Wird die Länge l solcher Verbindungselemente 5 geringer als die Hälfte der Länge der Rahmenlängsholme 2 bzw. höchstens entsprechend derselben gewählt, so lassen sich die Verbindungselemente 5 zweckmässig auch als die Stösse zwischen zwei aufeinanderfolgenden Paaren von Rahmenlängsholmen 2 überbrückende Verbindungslaschen einsetzen.

Statt der beiden Standfüsse 9 gemäss Fig. 1 ist hier ein einziger die gesamte Bandfördervorrichtung 1 tragender Standfuss 8 vorgesehen. Dieser weist einen einzigen mittigen Standpfeiler 31 auf, der mit seinem unteren Ende teleskopisch geführt und über eine zwar dargestellte, nicht jedoch näher bezeichnete Feststelleinrichtung in einem verfahrbaren Standschemel 42 höhenverstellbar geführt ist und an seinem schemelfernen Ende einen *Querholm 44 trägt, an dessen beiden Stirnenden* jeweils beispielsweise mittels Schweissens ein Anschlussflansch 10 festgelegt ist, wobei beide Anschlussflansche einen solchen Abstand zueinander haben, der dem Abstandsmass zwischen den Innenflächen oder zwischen den Aussenflächen zweier im Zusammenbauzustand gegenüberliegender Rahmenlängsholme 2 entspricht. Diese weisen jeweils übereinander angeordnet zwei Flanschlöcher 12 auf. Kommt es auf eine Veränderung der Förderneigung der Bandfördervorrichtung 1 nicht an, so können die Löcher 12 in den Anschlussflanschen 10 auch in der Rasteranordnung der Löcher 3 der Rahmenlängsholme 2 entsprechender Anordnung und mit etwa gleicher Grösse ausgeführt sein, so dass der Standfuss über die Anschlussflansche 10 des Querholms 44 seines Standpfeilers 31 unmittelbar an den Rahmenlängsholmen 2 angeschlossen werden kann. Ist hingegen eine Verstellbarkeit der Förderneigung erwünscht, so werden die Flanschlöcher 12 in dargestellter Anordnung mit gleichem Abstand wie dem des kreisbogenförmigen Schlitzes zu seinem Mittelpunktsloch 49 im dargestellten Schwenkflansch 47 ausgeführt, und der Anschluss des Standfusses 8 erfolgt über die Anschlussflansche 10 in der gleichen Weise, wie bereits im Zusammenhang mit Fig. 2 bezüglich des Anschlusses der Anschlussflansche 11 der Standfüsse 9 beschrieben.

Da es sich bei der Ausführungsform der Erfindung gemäss Fig. 2 um einen Knickbandförderer handelt, weist dieser zwei Paare von Rahmenlängsholmen 2 auf, die im Bereich der Knickstelle über eine als Ganzes mit 53 bezeichnete Umlenkeinrichtung mit paarweise vorgesehenen Lagerträgern 54 verbunden sind, die jeweils zwei Schenkel 55a, 55b aufweisen und mittels einer jeweils durch miteinander fluchtende Löcher in diesen gemeinsam hindurchgreifender Verschraubungen 84 in ihrer winkelmässigen Zuordnung zueinander veränderbar und in der gewünschten Winkelstellung zueinander festgelegt haltbar sind. Beide Schenkel 55a, 55b eines jeden Lagerträgers 54 weisen jeweils ein in den Profilhohlraum des benachbarten Rahmenlängsholmes 2 einführbares Endstück 57a bzw. 57b mit jeweils einem sich symmetrisch zur Rasterlinie m des zugeordneten Rahmenlängsholms 2 erstreckenden Sackschlitz 58a bzw. 58b auf, das in bereits im Zusammenhang mit den Walzenträgern der Aufgabewalze 20 bzw. der Abgabewalze 40 gemäss Fig. 1 beschriebener Weise mittels Verschraubungen 28 erforderlichenfalls unter Zuhilfenahme von Klemmplatten 30 am jeweils zugeordneten Rahmenlängsholm 2 fixiert werden kann. Die Halterung der Aufgabewalze 20 am freien Ende des rechts unten dargestellten Rahmenlängsholmpaares ist im übrigen die gleiche, wie bereits im Zusammenhang mit Fig. 1 beschrieben.

Die aufgabewalzenseitigen Schenkel 55b weisen jeweils eine Lagerung für Niederhalterollen 62 für das Obertrum des Fördermittels 27 in Form von durch Schraubbolzen 63 gebildeten Achsen auf, die mit einem sich nach oben erstreckenden *Lappen dieses Schenkels 55b verschraubt werden.* Die anderen Schenkel 55a lagern in der gleichen Weise, wie die Aufgabewalze 20 in ihren Walzenträgern 15 gelagert ist, die Achse 61 einer Umlenkwalze 60 für das Untertrum des Fördermittels 27. In diesem Zusammenhang ist hervorzuheben, dass auch die Funktionsweise der durch eine Nase 56a am Schenkel 55a und das Schraubstück 59a gebildeten Spanneinrichtung der Umlenkeinrichtung 53 für die Umlenkwalze 60 die gleiche ist wie die der Spanneinrichtung 16, 19 für die Aufgabewalze 20.

Auch hinsichtlich des Aufgabetrichters 71 ist der erfindungsgemässe Bausatz gemäss Fig. 2 im wesentlichen in der gleichen Weise ausgebildet wie der gemäss Fig. 1, wenn auch die Einzelteile 71a, 71b für diesen eine andere Ausführung aufweisen. Hier ist der Aufgabetrichter 71 statt für seitliche Verschraubung an und mit den Rahmenlängsholmen 2, wie vorstehend im Zusammenhang mit Fig. 1 beschrieben, für Aufsetzen auf die oberen Seitenstege des Profils der Rahmenlängsholme 2 vorgesehen, auf denen er mittels Verschraubungen 99 fixiert werden kann. Der sich vom unteren Ende der seitlichen Teilstücke 71a seitlich wegerstreckende Standflansch derselben dient ferner dazu, mittels einer nicht dargestellten Tragleiste über eine Distanzleiste 93 ein das Obertrum des Fördermittels 27 im Bereich der Aufgabestelle für das Fördergut von seiner Unterseite her abstützendes Gleitblech 92 zu tragen. Auf der Länge des ansteigenden Astes des Bandförderers 1 ist in der gleichen Weise wie vorstehend im Zusammenhang mit der Ausführungsform gemäss Fig. 1 beschrieben, ein Gleitblech 88 das Obertrum des Fördermittels 27 untergreifend gehalten, das jedoch in Fig. 2 nicht dargestellt ist.

Im Bereich der Abgabestelle des Fördergutes ist ein Paar von Abgabeschlürwänden 74 angeordnet, von denen lediglich eine in Fig. 2 dargestellt ist. Sie ist als runenförmig abgekröpfter Blechformling ausgebildet und besitzt in seinem nach unten weisenden Flansch eine Anzahl in der Rasteranordnung der Löcher 3 der Rahmenlängsholme 2 entsprechender Anordnung vorgesehener Löcher 75 etwa gleicher Grösse wie die Löcher 3 der Rahmenlängsholme 2. Ist der sich nach unten erstreckende Flansch der Abgabeschlürwand 74 mit genügender Breite ausgeführt, so kann in bereits vielfach beschriebener Weise mittels Verschraubungen 28 die Schlürwand 77 unmittelbar an den zugeordneten Rahmenlängsholmen 2 festgelegt werden. Bei im Hinblick auf die Laufhöhe des Obertrums des Fördermittels 27 ungenügender Breite des sich nach unten erstreckenden Flansches der Schlürwand 74 jedoch kann auch hier für jede Schlürwand 74 mindestens ein Tragflansch 76, vorzugsweise jedoch jeweils ein Paar solcher Tragflansche 76, vorgesehen sein, die längs ihrem oberen Rand jeweils mindestens 2 Löcher 77 aufweisen, mit denen sie über geeignete Verschraubungen mit dem sich nach unten erstreckenden Flansch der Schlürwand 74 verbunden werden können. Etwa längs ihres unteren Randes weisen die Tragflansche 76 ihrerseits nun jeweils mindestens 2 in der Rasteranordnung der Löcher 3 der Rahmenlängsholme 2 entsprechender Anordnung vorgesehene Löcher 78 etwa gleicher Grösse wie die Löcher 3 der Rahmenlängsholme 2 auf, über welche sie und damit auch die jeweils zugeordnete Schlürwand 74 in beschriebener Weise mittels durch sie und entsprechend fluchtende Löcher 3 der Rahmenlängsholme 2 hindurchgreifender Verschraubungen 28 an diesen festgelegt werden können.

Abschliessend ist noch hervorzuheben, dass die Rahmenlängsholme 2 statt wie bei den in Fig. 1 und 2 dargestellten Ausführungsbeispielen der Erfindung als C-Profile auch als U-Profile ausgebildet sein können. Ausserdem brauchen die Rahmenlängsholmprofile 2 sich nicht über die gesamte Länge der Bandfördervorrichtung 1 nach der Erfindung zu erstrecken, vielmehr kann deren Förderbandrahmen auch aus einer Vielzahl von Paaren von Rahmenlängsholmprofilen 2 zusammengesetzt sein, die dann entweder über in deren Profilhohlraum die Stossstelle zwischen zwei solcher Paare von Rahmenlängsholmen 2 überbrückend eingreifende Verbindungslaschen, als welche im übrigen auch die Anschlussflansche 33 eines Querholms 4 dienen können, miteinander verbunden werden können, oder aber mit Vorzug durch ein in bereits beschriebener Weise als eine solche Stossstelle zweier Paare von Rahmenlängsholmen 2 überbrückend eingesetztes U-rinnenförmiges Verbindungselement 5.

Im übrigen ist selbstverständlich, dass der Bausatz nach der Erfindung auch in den Ansprüchen nicht ausdrücklich hervorgehobene Verschraubungen, Verstiftungen, Distanzscheiben, Unterlegscheiben und dergleichen Maschinenelemente aufweisen kann, die jedoch für die Erfindung nicht wesentlich zu sein brauchen.

**Patentansprüche**

1. Bausatz für die Erstellung von Bandfördervorrichtungen mit mindestens einem Paar von Rahmenlängsholmen (2), die jeweils als Profilteil nichtebenen Querschnitts ausgebildet sind und auf dessen Mittellinie in einem Linienraster gleichen Lochabstandes angeordnete Löcher (3) aufweisen, einer wenigstens der Zahl der Paare der Rahmenlängsholme entsprechenden Anzahl von Verbindungselementen oder Paaren derselben mit beidseitig jeweils etwa normal wegstehendem Befestigungsflansch zur Festlegung derselben an jeweils einem zugeordneten Rahmenlängsholm, einem Fördermittel in Form eines Bandes oder Riemens oder mehrerer derselben oder eines Scharnierbandes und einer der Zahl der Bänder bzw. Riemen bzw. Scharnierbänder entsprechenden Anzahl von Aufgabewalzen und Abgabewalzen, die im Zusammenbauzustand jeweils mittels eines Paares gegenüber jeweils einem zugeordneten Rahmenlängsholm (2) festlegbarer Aufgabewalzenträger (15) und Abgabewalzenträger (35) abstützbar sind, mindestens einem Standfuss (8 bzw. 9) mit im Zusammenbauzustand an jeweils einen zugeordneten Rahmenlängsholm anschliessbaren Anschlussflanschen und einer Zahl der im Zusammenbauzustand korrespondierenden Löcher der aneinander zu befestigenden Bauteile entsprechenden Anzahl von Verschraubungen (28), dadurch gekennzeichnet, dass die Rahmenlängsholme (2) jeweils als U- oder C-Profil ausgebildet sind, in dessen ebenem Bodensteg (2a) in jeweils linienrastergleichem Lochabstand Löcher (3) angeordnet sind, mittels derer mit den Rahmenlängsholmen (2) zu verbindende Bauteile (z.B. 4 bzw. 5 bzw. 8 bzw. 9 bzw. 14 bzw. 22 bzw. 34 bzw. 52 bzw. 64 bzw. 66 bzw. 71 bzw. 74 bzw. 79 bzw. 97) über mindestens zwei in entsprechendem Lochabstand angeordnete Löcher (6 bzw. 7 bzw. 48 bzw. 26 bzw. 25 bzw. 65 bzw. 67 bzw. 70 bzw. 74 bzw. 75 bzw. 78 bzw. 81 bzw. 96) in jeweils mindestens einem in Anlage an dem Bodensteg (2a) des Rahmenlängsholms (2) bringbaren Befestigungsflansch (33 bzw. 56 bzw. 10, 47 bzw. 11, 47 bzw. 15 bzw. 24 bzw. 35 bzw. 55a bzw. 55b bzw. 68 bzw. 76 bzw. 80 bzw. 95) derselben durchgreifender Verschraubungen an den Rahmenlängsholmen (2) festlegbar sind, und dass ein im Zusammenbauzustand von mindestens einem Rahmenlängsholm (2) tragbarer Antriebsmotor (2) mit Mitnahmeverbindung für das Fördermittel (27) und mindestens einem Lagerschild (24), der in gleicher Weise am Bodensteg (2a) eines zugeordneten Rahmenlängsholms (2) festlegbar ist, vorgesehen ist.

2. Bausatz nach Anspruch 1, dadurch gekennzeichnet, dass mindestens ein Verbindungselement (4) vorgesehen ist, das als Querstrebe in Form eines Massivstab- oder Rohrabschnittes mit an jedem Ende einem sich in einem im Zusammenbauzustand dem Mass zwischen den Aussenflächen oder zwischen den Innenflächen beider Rahmenlängsholme (2) entsprechenden Abstand zueinander von ihm wegerstreckenden Randflansch (33) ausgebildet ist, von denen jeder mindestens zwei in der Rasteranordnung der Löcher (3) der Rahmenlängsholme (2) entsprechender Anordnung vorgesehene Löcher (6) etwa gleicher Grösse wie der der Rahmenlängsholme (2) aufweist.

3. Bausatz nach Anspruch 1 oder 2, dadurch gekennzeichnet, dass mindestens ein Verbindungselement (5), das als U-förmige Blechrinne mit von ihrem Mittelsteg (5a) sich in einem im Zusammenbauzustand dem Mass zwischen den Aussenflächen oder zwischen den Innenflächen beider Rahmenlängsholme (2) entsprechenden Abstand zueinander gleichsinnig etwa normal wegerstreckenden Randflanschen (5b) ausgebildet ist, von denen jeder wenigstens zwei in der Rasteranordnung der Löcher (3) der Rahmenlängsholme (2) entsprechender Anordnung vorgesehene Löcher (7) etwa gleicher Grösse wie der der Rahmenlängsholme (2) aufweist, und eine der Zahl der für die Befestigung dieses Verbindungselementes (5) bzw. dieser Verbindungselemente (5) an den zugeordneten Rahmenlängsholmen (2) vorgesehenen Löcher (3, 7) entsprechende Anzahl von vorzugsweise aus Schraubbolzen, Mutter mit Unterlegscheibe und Kontermutter bestehenden Verschraubungen (28) vorgesehen ist.

4. Bausatz nach Anspruch 3, dadurch gekennzeichnet, dass die bzw. zumindest eine der Blechrinne(n) (5) eine etwa der Länge der Rahmenlängsholme (2) entsprechende Länge (l) aufweist.

5. Bausatz nach Anspruch 3 oder 4, dadurch gekennzeichnet, dass die bzw. zumindest eine der Blechrinne(n) (5) eine höchstens der Hälfte der Länge der Rahmenlängsholme (2) entsprechende Länge (l) aufweist.

6. Bausatz nach Anspruch 5, mit mehreren Paaren von Rahmenlängsholmen, gekennzeichnet durch eine der um eins vermehrten Zahl der Paare der Rahmenlängsholme (2) entsprechende Anzahl von Blechrinnen (5).

7. Bausatz nach einem der vorhergehenden Ansprüche, gekennzeichnet durch mindestens ein Paar, vorzugsweise eine der Zahl der Standfüsse (9) entsprechende Anzahl von Paaren von Standpfeilern (32), die auf ihrer einen Seite eine Einrichtung zur ortsfesten Festlegung beispielsweise in Form einer Fussplatte (43) und auf ihrer anderen Seite einen Anschlussflansch (11) aufweisen, und durch eine wenigstens der Zahl der Paare von Standfüssen (9) entsprechende Anzahl von Querholmen (45) mit in einem im Zusammenbauzustand dem Mass zwischen den Aussenflächen oder zwischen den Innenflächen gegenüberliegender Rahmenlängsholme (2) entsprechenden Abstand zueinander angeordneten endseitigen Anschlussflanschen (46).

8. Bausatz nach einem der vorhergehenden Ansprüche, gekennzeichnet durch mindestens einen Querholm (44), vorzugsweise eine der Zahl der Standfüsse (8) entsprechende Anzahl von Querholmen (44), der bzw. die jeweils in einem im Zusammenbauzustand dem Mass zwischen den Aussenflächen oder zwischen den Innenflächen gegenüberliegender Rahmenlängsholme (2) entsprechenden Abstand voneinander angeordnete Anschlussflanschen (10) und einen sich etwa mittig von ihm wegerstreckenden Standpfeiler (31) aufweisen, der an seinem querholmfernen Ende eine Einrichtung (42) zur ortsfesten Festlegung aufweist.

9. Bausatz nach Anspruch 8, dadurch gekennzeichnet, dass die Einrichtung (42) zur ortsfesten Festlegung als Fussplatte ausgebildet ist.

10. Bausatz nach Anspruch 8, dadurch gekennzeichnet, dass die Einrichtung (42) zur ortsfesten Festlegung als vorzugsweise verfahrbarer und/ oder relativ zum Querholm (44) höhenverstellbarer Standschemel ausgebildet ist.

11. Bausatz nach einem der Ansprüche 7 bis 10, dadurch gekennzeichnet, dass die Standpfeiler (31 bzw. 32) mindestens eines Paares von Standpfeilern (32) oder der bzw. mindestens einer der einzeln vorgesehene(n) Standpfeiler (31) jeweils aus wenigstens zwei teleskopisch ineinander schiebbaren und mittels einer Feststelleinrichtung in gewünschter Arbeitsstellung fixierbaren Teilstücken (z.B. 32a, 32b) gebildet ist bzw. sind.

12. Bausatz nach einem der Ansprüche 7 bis 11, dadurch gekennzeichnet, dass die Anschlussflansche (10 bzw. 11) jeweils wenigstens zwei in der Rasteranordnung der Löcher (3) der Rahmenlängsholme (2) entsprechender, vorzugsweise gegenüber der Mittellängslinie (n) des bzw. der zugeordneten Standpfeiler(s) (31 bzw. 32) geneigter Anordnung vorgesehene Löcher (12 bzw. 13) etwa gleicher Grösse wie der der Rahmenlängsholme (2) aufweisen und dass eine der Zahl der für die Befestigung dieser Anschlussflansche (10 bzw. 11) an den zugeordneten Rahmenlängsholmen (2) vorgesehenen Löcher (3, 12 bzw. 3, 13) entsprechende Anzahl von vorzugsweise aus Schraubbolzen, Mutter mit Unterlegscheibe und Kontermutter bestehenden Verschraubungen (28) vorgesehen ist.

13. Bausatz nach einem der Ansprüche 7 bis 12, gekennzeichnet durch mindestens ein Paar von Schwenkflanschen (47), die jeweils wenigstens zwei in der Rasteranordnung der Löcher (3) der Rahmenlängsholme (2) entsprechender Anordnung vorgesehene Löcher (48) etwa gleicher Grösse wie der der Rahmenlängsholme (2) und einen zu einem dieser Löcher (48) oder vorzugsweise zu einem weiteren Loch (49) konzentrischen kreisbogenförmigen Längsschlitz (50) aufweisen, ferner durch ein in den beiden Anschlussflanschen (10 bzw. 11) zumindest eines Standfusses (8 bzw. 9) mit Neigung gegenüber der im Zusammenbauzustand vorgesehenen Anordnung der Löcher (3) der Rahmenlängsholme (2) in einem dem Mittelpunktsabstand von kreisbogenförmigem Schlitz (50) und dessen Mittelpunktsloch (48 bzw. 49) im zugeordneten Schwenkflansch (47) entsprechenden Abstand eingebrachtes Paar von Löchern (12 bzw. 13) und ein Paar von jeweils einem Schwenkflansch (47) zugeordneten Feststellverschraubungen (52) sowie eine der Zahl der für die Befestigung dieser Schwenkflansche (47) an den zugeordneten Rahmenlängsholmen (2) vorgesehenen Löcher (3, 48) entsprechende Anzahl von vorzugsweise aus Schraubbolzen, Mutter mit Unterlegscheibe und Kontermutter bestehenden Verschraubungen (28).

14. Bausatz nach einem der vorhergehenden Ansprüche, dadurch gekennzeichnet, dass die Aufgabewalze(n) (20) oder die Abgabewalze(n) (40) als Antriebswalze(n) ausgebildet ist bzw. sind.

15. Bausatz nach Anspruch 14, dadurch gekennzeichnet, dass die Walzenträger (15 bzw. 35) der als Antriebswalze(n) dienenden Aufgabe- bzw.

Abgabewalze(n) (20 bzw. 40) jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweisen, und dass eine der Zahl der für die Befestigung dieser Walzenträger (15 bzw. 35) an den zugeordneten Rahmenlängsholmen (2) vorgesehenen Löcher entsprechende Anzahl von vorzugsweise aus Schraubbolzen, Mutter mit Unterlegscheibe und Kontermutter bestehenden Verschraubungen (28) vorgesehen ist.

16. Bausatz nach Anspruch 14, dadurch gekennzeichnet, dass die Walzenträger (15) der Aufgabewalze(n) (20) und/oder die Walzenträger (35) der Abgabewalze(n) (40) jeweils ein von der Stirnseite eines Rahmenlängsholmes (2) in dessen Profilhohlraum für geführte Verschiebung einführbares Endstück (17 bzw. 37) und eine Spanneinrichtung (16, 19 bzw. 36, 39) aufweisen, mittels derer der jeweilige Walzenträger (15. bzw. 35) bezüglich des Achsabstandes der von ihm abgestützten Welle (21) bzw. Achse (41) relativ zur Stirnfläche des zugeordneten Rahmenlängsholmes (2) verstellbar und in Arbeitsstellung festlegbar ist.

17. Bausatz nach Anspruch 16, dadurch gekennzeichnet, dass die in einen Profilhohlraum eines Rahmenlängsholmes (2) einführbaren Walzenträger (15 bzw. 35) in ihrem Endstück (17 bzw. 37) einen im Zusammenbauzustand zur Rasterlinie (m) der Löcher (3) des Rahmenlängsholmes (2) symmetrischen und zum freien Ende des Endstückes (17 bzw. 37) offenen Sackschlitz (18 bzw. 38) aufweisen und dass die Spanneinrichtung (16, 19 bzw. 36, 39) eine Nase (16 bzw. 36) am Walzenträger (15 bzw. 35) mit einem Gewindeloch und einem in diesem verschraubbaren und mit seinem einen Ende an einer Stützfläche am zugeordneten Rahmenlängsholm (2) in Anlage bringbaren Gewindestift (19 bzw. 39) sowie jeweils mindestens zwei der Sackschlitzbreite grössenmässig entsprechende Verschraubungen (28) mit jeweils einer oder einer gemeinsamen das Endstück (17 bzw. 37) hintergreifenden Klemmplatte (30) aufweist.

18. Bausatz nach einem der Ansprüche 1 bis 13, dadurch gekennzeichnet, dass zusätzlich zu Aufgabe- und Abgabewalze(n) (20, 40) eigens eine mit dem Antriebsmotor (22) in Antriebsverbindung bringbare Antriebswelle mit einer oder mehreren Antriebswalze(n) vorgesehen ist, und dass ein Paar Lagerschilde für diese, die jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2), eine Lagerungseinrichtung für die Antriebswelle und eine Halterungseinrichtung für den mit seiner Abtriebswelle mit der Antriebswelle über eine Kupplungseinrichtung direkt oder über einen kinematischen Übertragungskettenzug (23) in Form eines Riemen- oder Kettentriebes gekuppelten Antriebsmotor (22) und erforderlichenfalls für diesen kinematischen Antriebskettenzug (23) sowie eine der Zahl der für die Befestigung dieser Lagerschilde an den zugeordneten Rahmenlängsholmen (2) vorgesehenen Löcher entsprechende Anzahl von vorzugsweise aus Schraubbolzen, Mutter mit Unterlegscheibe und Kontermutter bestehenden Verschraubungen (28) aufweisen, vorgesehen ist oder der Lagerschild (24) des Antriebsmotors (22) zusätzlich eine Lagerungseinrichtung für die Antriebswelle aufweist und zur Bildung eines Paares von Lagerschilden für die Antriebswelle ein weiterer Lagerschild (4), der gleichfalls mindestens zwei in der Rasteranordnung der Löcher (3) der Rahmenlängsholme (2) entsprechender Anordnung vorgesehene Löcher (25) etwa gleicher Grösse wie der der Rahmenlängsholme (2) und eine Lagerungseinrichtung für die Antriebswelle aufweist, und eine der Zahl der für die Befestigung dieses Lagerschildes (z.B. 24) am zugeordneten Rahmenlängsholm (2) vorgesehenen Löcher (z.B. 25) entsprechende Anzahl von vorzugsweise aus Schraubbolzen, Mutter mit Unterlegscheibe und Kontermutter bestehenden Verschraubungen (28) vorgesehen ist.

19. Bausatz nach Anspruch 18 mit Antriebsmotor mit kinematischem Antriebskettenzug in Form eines Riemen- oder Kettentriebes, dadurch gekennzeichnet, dass die Lagerschilde (z.B. 24) für die Antriebswelle jeweils eine Spanneinrichtung für die Veränderung des Achsabstandes der Abtriebswelle des Antriebsmotors (22) zur Antriebswelle aufweisen.

20. Bausatz nach Anspruch 18 oder 19, dadurch gekennzeichnet, dass zusätzlich zu Aufgabe- und Abgabewalze(n) (20, 40) und Antriebswalze(n) zwei Umlenkwalzen oder zwei Satz jeweils der Zahl der Bänder (27) bzw. Riemen. Scharnierbänder entsprechender Umlenkwalzen vorgesehen sind und dass für jede Achse dieser Umlenkwalzen bzw. Umlenkwalzensätze ein Paar Lagerschilde, die jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) und eine Lagerungseinrichtung für die zugeordnete Umlenkwalzenachse sowie eine der Zahl der für die Befestigung dieser Lagerschilde am zugeordneten Rahmenlängsholm (2) vorgesehenen Löcher entsprechende Anzahl von vorzugsweise aus Schraubbolzen, Mutter mit Unterlegscheibe und Kontermutter bestehenden Verschraubungen (28) aufweisen, vorgesehen ist oder für nur eine Achse dieser Umlenkwalzen bzw. Umlenkwalzensätze ein Paar Lagerschilde dieser Ausbildung nebst zugehörigen Verschraubungen (28) vorgesehen ist und die Lagerschilde (z.B. 24) für die Antriebswelle jeweils eine Lagerungseinrichtung für die andere Umlenkwalzenachse aufweisen oder die Lagerschilde (z.B. 24) für die Antriebswelle jeweils zwei Lagerungseinrichtungen aufweisen, mittels derer beide Umlenkwalzenachsen in korrespondierender Arbeitsstellung haltbar sind.

21. Bausatz nach einem der vorhergehenden Ansprüche mit mindestens zwei für die Erstellung eines Knickbandförderers im Zusammenbauzustand in winkelförmiger Zuordnung zueinander anzuordnenden Paaren von Rahmenlängsholmen, gekennzeichnet durch mindestens eine Umlenkeinrichtung (52) für das Fördermittel (27) mit jeweils einem Paar von Lagerträgern (54) für die Achsen (61 bzw. 63) einer oder mehrerer Umlenkwalze(n) (60) für das Unter- oder Obertrum des Fördermittels (27) sowie einer oder mehrerer Niederhalterolle(n) (62) für das andere Trum desselben, die jeweils zwei Schenkel (55a, 55b) aufweisen, von denen im Zusammenbauzustand jeweils einer an einem Rahmenlängsholm (2) und der andere am in Förderrichtung (F) folgenden Rahmenlängsholm (2) abstützbar ist.

22. Bausatz nach Anspruch 21, dadurch gekennzeichnet, dass jeweils der eine Schenkel (55a) eines jeden Lagerträgers (54) eine Lagerungseinrichtung für die Achse (61) der Umlenkwalze(n) (60) und der andere Schenkel (55b) eines jeden Lagerträgers (54) eine Lagerungseinrichtung für die Achse (63) der Niederhalterolle(n) (62) aufweist.

23. Bausatz nach Anspruch 21 oder 22, dadurch gekennzeichnet, dass die Schenkel (55a, 55b) beider Lagerträger (54) mindestens einer Umlenkeinrichtung (53) in ihrer Winkelstellung zueinander veränderbar sind.

24. Bausatz nach einem der Ansprüche 21 bis 23, dadurch gekennzeichnet, dass jeweils zumindest einer der Schenkel (55a bzw. 55b) der Lagerträger (54) mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweist, und dass eine der Zahl der für die Befestigung dieser Schenkel (55a bzw. 55b) an den zugeordneten Rahmenlängsholmen (2) vorgesehenen Löcher entsprechende Zahl von vorzugsweise aus Schraubbolzen, Mutter mit Unterlegscheibe und Kontermutter bestehenden Verschraubungen (28) vorgesehen ist.

25. Bausatz nach einem der Ansprüche 21 bis 24, dadurch gekennzeichnet, dass jeweils zumindest ein Paar von im Zusammenbauzustand gegenüberliegenden Schenkeln (55a bzw. 55b) der Lagerträger (54) ein von der Stirnseite eines Rahmenlängsholms (2) in dessen Profilhohlraum für geführte Verschiebung einführbares Endstück (57a bzw. 57b) und eine Spanneinrichtung (z.B. 56a, 59a) aufweist, mittels derer der jeweilige Schenkel (55a bzw. 55b) bezüglich des Achsabstandes der von ihm abgestützten Welle(n) (61) bzw. Achse(n) (63) relativ zur Stirnfläche des zugeordneten Rahmenlängsholms (2) verstellbar und in Arbeitsstellung festlegbar ist.

26. Bausatz nach Anspruch 25, dadurch gekennzeichnet, dass die in einen Profilhohlraum eines Rahmenlängsholms (2) einführbaren Schenkel (55a bzw. 55b) der Lagerträger (54) in ihrem Endstück (57a bzw. 57b) einen im Zusammenbauzustand zur Rasterlinie (m) der Löcher (3) des Rahmenlängsholmes (2) symmetrischen und zum freien Ende des Endstückes (57a bzw. 57b) offenen Sackschlitz (58a bzw. 58b) aufweisen und dass die Spanneinrichtung (z.B. 56a, 59a) eine Nase (z.B. 56a) am Schenkel (z.B. 55a) mit einem Gewindeloch und einem in diesem verschraubbaren und mit seinem einen Ende an einer Stützfläche am zugeordneten Rahmenlängsholm (2) in Anlage bringbaren Gewindestift (z.B. 59a) sowie jeweils mindestens zwei der Sackschlitzbreite grössenmässig entsprechende Verschraubungen (28) mit jeweils einer oder einer gemeinsamen das Endstück (z.B. 57a) hintergreifenden Klemmplatte (30) aufweist.

27. Bausatz nach einem der vorhergehenden Ansprüche, gekennzeichnet durch mindestens ein Stützhorn (64), vorzugsweise ein Paar von Stützhörnern (64), das bzw. die jeweils mindestens zwei in der Rasteranordnung der Löcher (3) der Rahmenlängsholme (2) entsprechender Anordnung vorgesehene Löcher (65) etwa gleicher Grösse wie der der Rahmenlängsholme 82) aufweist bzw. aufweisen, und durch eine der Zahl der für die Befestigung dieses Stützhorns (64) bzw. dieser Stützhörner (64) vorgesehenen Löcher (3, 65) an dem bzw. den zugeordneten Rahmenlängsholm(en) (2) entsprechende Anzahl von vorzugsweise aus Schraubbolzen, Mutter mit Unterlegscheibe und Kontermutter bestehenden Verschraubungen (28).

28. Bausatz nach einem der vorhergehenden Ansprüche, gekennzeichnet durch mindestens eine im Zusammenbauzustand zur seitlichen Begrenzung des auf dem Obertrum des Fördermittels (27) zu fördernden Fördergutes oberhalb eines zugeordneten Rahmenlängsholmes (2) angeordnete Gleitleiste (66) und jeweils mindestens zwei Tragflansche (68) für diese, die jeweils mindestens zwei in der Rasteranordnung der Löcher (3) der Rahmenlängsholme (2) entsprechender Anordnung vorgesehene Löcher (70) etwa gleicher Grösse wie der der Rahmenlängsholme (2) aufweisen, sowie eine der Zahl der für die Befestigung dieser Tragflansche (68) an dem bzw. den zugeordneten Rahmenlängsholm(en) (2) entsprechende Anzahl von vorzugsweise aus Schraubbolzen, Mutter mit Unterlegscheibe und Kontermutter bestehenden Verschraubungen (28).

29. Bausatz nach einem der vorhergehenden Ansprüche, gekennzeichnet durch einen gegebenenfalls aus einzelnen Wandungsteilen (71a, 71b) zusammensetzbaren Aufgabetrichter (71), der einen unteren Bereich mit einem dem Mass zwischen den Aussenflächen beider ihm im Zusammenbauzustand abstützenden Rahmenlängsholme (2) entsprechenden lichten Innenmass und auf seinen jeweils einen Rahmenlängsholm (2) zugeordneten gegenüberliegenden Seiten jeweils mindestens zwei in der Rasteranordnung der Löcher (3) der Rahmenlängsholme (2) entsprechender Anordnung vorgesehene Löcher (74) etwa gleicher Grösse wie der der Rahmenlängsholme (2) aufweist, oder durch einen gegebenenfalls aus einzelnen Wandungsteilen (71a, 71b) zusammensetzbaren Aufgabetrichter (71) und mindestens zwei, vorzugsweise zwei Paare von mit diesem verbindbaren, in einem im Zusammenbauzustand dem Mass zwischen den Aussenflächen beider ihn abstützenden Rahmenlängsholme (2) ent

sprechenden Abstand zueinander angeordnete(n) Tragflansche(n), die ihrerseits jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweist, sowie jeweils eine der Zahl der für die Befestigung des unteren Bereiches des Aufgabetrichters (71) bzw. der Tragflansche für diesen an den zugeordneten Rahmenlängsholmen (2) vorgesehenen Löcher (3, 74) entsprechende Anzahl von vorzugsweise aus Schraubbolzen, Mutter mit Unterlegscheibe und Kontermutter bestehenden Verschraubungen (28).

30. Bausatz nach einem der vorhergehenden Ansprüche, gekennzeichnet durch eine gegebenenfalls aus einzelnen Wandungsteilen zusammensetzbare Abgabeschurre, die einen unteren Bereich mit einem dem Mass zwischen den Aussenflächen beider sie im Zusammenbauzustand abstützenden Rahmenlängsholme (2) entsprechenden lichten Innenmass und auf ihren jeweils einem Rahmenlängsholm (2) zugeordneten gegenüberliegenden Seiten jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweist, oder durch eine gegebenenfalls aus einzelnen Wandungsteilen zusammensetzbare Abgabeschurre und mindestens zwei, vorzugsweise zwei Paare von mit dieser verbindbaren, in einem im Zusammenbauzustand dem Mass zwischen den Aussenflächen beider sie abstützenden Rahmenlängsholme (2) entsprechenden Abstand zueinander angeordnete(n) Tragflansche(n), die ihrerseits jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweisen, sowie jeweils eine der Zahl der für die Befestigung des unteren Bereiches der Abgabeschurre bzw. der Tragflansche für diese an den zugeordneten Rahmenlängsholmen (2) vorgesehenen Löcher entsprechende Anzahl von vorzugsweise aus Schraubbolzen, Mutter mit Unterlegscheibe und Kontermutter bestehenden Verschraubungen (28).

31. Bausatz nach einem der vorhergehenden Ansprüche mit mindestens zwei für die Erstellung eines Knickbandförderers im Zusammenbauzustand in winkelförmiger Zuordnung zueinander anzuordnenden Paaren von Rahmenlängsholmen, gekennzeichnet durch mindestens eine gegebenenfalls aus einzelnen Wandungsteilen zusammensetzbare Übergangsschurre, die einen unteren Bereich mit einem dem Mass zwischen den Aussenflächen beider sie im Zusammenbauzustand abstützenden Rahmenlängsholme entsprechenden lichten Innenmass und auf ihren jeweils einem Rahmenlängsholm (2) zugeordneten gegenüberliegenden Seiten jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweist, oder durch mindestens eine gegebenenfalls aus einzelnen Wandungsteilen zusammensetzbare Übergangsschurre und jeweils mindestens zwei, vorzugsweise zwei Paare von mit dieser verbindbaren, in einem im Zusammenbauzustand dem Mass zwischen den Aussenflächen beider sie abstützenden Rahmenlängsholme (2) entsprechenden Abstand zueinander angeordnete(n) Tragflansche(n), die ihrerseits jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweisen, sowie jeweils eine der Zahl der für die Befestigung des unteren Bereiches der Übergangsschurre bzw. der Tragflansche für diese an den zugeordneten Rahmenlängsholmen (2) vorgesehenen Löcher entsprechende Anzahl von vorzugsweise aus Schraubbolzen, Mutter mit Unterlegscheibe und Kontermutter bestehenden Verschraubungen (28).

32. Bausatz nach einem der Ansprüche 1 bis 28, gekennzeichnet durch mindestens eine im Zusammenbauzustand zur seitlichen Begrenzung der Aufgabestelle für das Fördergut im Bereich des Obertrums des Fördermittels (27) oberhalb eines zugeordneten Rahmenlängsholmes (2) angeordnete Aufgabeschlürwand und/oder mindestens eine im Zusammenbauzustand zur seitlichen Begrenzung der Abgabestelle für das Fördergut im Bereich des Obertrums des Fördermittels (27) oberhalb eines zugeordneten Rahmenlängsholmes (2) angeordnete Abgabeschlürwand (74), vorzugsweise ein Paar solcher Aufgabeschlürwände und/oder ein Paar solcher Abgabeschlürwände (74), die in ihrem unteren Bereich jeweils mindestens zwei in der Rasteranordnung der Löcher (3) der Rahmenlängsholme (2) entsprechender Anordnung vorgesehene Löcher (75) etwa gleicher Grösse wie der der Rahmenlängsholme (2) aufweist bzw. aufweisen, oder durch mindestens eine im Zusammenbauzustand zur seitlichen Begrenzung der Aufgabestelle für das Fördergut im Bereich des Obertrums des Fördermittels (27) oberhalb eines zugeordneten Rahmenlängsholmes (2) angeordnete Aufgabeschlürwand und/oder mindestens eine im Zusammenbauzustand zur seitlichen Begrenzung der Abgabestelle für das Fördergut im Bereich des Obertrums des Fördermittels (27) oberhalb eines zugeordneten Rahmenlängsholmes (2) angeordnete Abgabeschlürwand (74), vorzugsweise ein Paar solcher Aufgabeschlürwände und/oder ein Paar solcher Abgabeschlürwände (74), und jeweils mindestens zwei, vorzugsweise zwei Paare von mit dieser bzw. diesen verbindbaren Tragflanschen (z.B. 76), die ihrerseits jeweils mindestens zwei in der Rasteranordnung der Löcher (3) der Rahmenlängsholme (2) entsprechender Anordnung vorgesehene Löcher (z.B. 78) etwa gleicher Grösse wie der der Rahmenlängsholme (2) aufweisen, sowie jeweils eine der Zahl der für die Befestigung der unteren Bereiche der Aufgabeschlürwand bzw. -wände und/oder der Abgabeschlürwand (74) bzw. -wände (74) bzw. der Tragflansche (76) für diese an den zugeordneten Rahmenlängsholmen (2) vorgesehenen Löcher (z.B. 3, 75 bzw. 3, 78) entsprechende Anzahl von vorzugsweise aus Schraubbolzen, Mutter mit Unterlegscheibe und Kontermutter bestehenden Verschraubungen (28).

33. Bausatz nach einem der Ansprüche 1 bis 30 und 32 mit mindestens zwei für die Erstellung eines Knickbandförderers im Zusammenbauzustand in winkelförmiger Zuordnung zueinander anzuordnenden Paaren von Rahmenlängsholmen, gekennzeichnet durch mindestens eine im Zusammenbauzustand zur seitlichen Begrenzung der Aufgabestelle für das Fördergut von einem Teil der Bandfördervorrichtung (1) vor der Knickstelle auf einen Teil derselben nach der Knickstelle im Bereich des Obertrums des Fördermittels (27) oberhalb eines zugeordneten Rahmenlängsholmes (2) angeordnete Übergangsschlürwand, vorzugsweise ein Paar solcher Übergangsschlürwände, die in ihrem unteren Bereich jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweist bzw. aufweisen, oder durch mindestens eine im Zusammenbauzustand zur seitlichen Begrenzung der Übergabestelle für das Fördergut von einem Teil der Bandfördervorrichtung (1) vor der Knickstelle auf einen Teil derselben nach der Knickstelle im Bereich des Obertrums des Fördermittels (27) oberhalb eines zugeordneten Rahmenlängsholmes (2) angeordnete Übergangsschlürwand, vorzugsweise ein Paar solcher Übergangsschlürwände, und jeweils mindestens zwei, vorzugsweise zwei Paare von mit dieser bzw. diesen verbindbaren Tragflanschen, die ihrerseits jeweils mindestens zwei in der Rasteranordnung der Löcher (3) der Rahmenlängsholme (2) entsprechender Anordnung vorgesehene Löcher etwa gleicher Grösse wie der der Rahmenlängsholme (2) aufweist, sowie jeweils eine der Zahl der für die Befestigung des bzw. der unteren Übergangsschlürwandbereiche(s) bzw. der Tragflansche für diese an den zugeordneten Rahmenlängsholmen (2) vorgesehenen Löcher entsprechende Anzahl von vorzugsweise aus Schraubbolzen, Mutter mit Unterlegscheibe und Kontermutter bestehenden Verschraubungen (28).

34. Bausatz nach einem der vorhergehenden Ansprüche, gekennzeichnet durch ein Steuerpult (79) für den Antriebsmotor (22) und einen Lagerschild (80) mit einer Festlegungseinrichtung für das Steuerpult (79) beispielsweise in Form von Befestigungsverschraubungen (83), der wenigstens zwei in der Rasteranordnung der Löcher (3) der Rahmenlängsholme (2) entsprechender Anordnung vorgesehene Löcher (81) etwa gleicher Grösse wie der der Rahmenlängsholme (2) aufweist, sowie eine der Zahl der für die Befestigung des Lagerschildes (80) an dem zugeordneten Rahmenlängsholm (2) vorgesehenen Löcher (3, 81) entsprechende Anzahl von vorzugsweise aus Schraubbolzen, Mutter mit Unterlegscheibe und Kontermutter bestehenden Verschraubungen (28).

35. Bausatz nach einem der vorstehenden Ansprüche, gekennzeichnet durch mindestens ein Paar von Lagerschilden (95) mit jeweils einer Aufnahmebohrung (98) für die Achse einer Führungswalze (97) oder eines Satzes von Führungswalzen (97), von denen jeder wenigstens zwei in der Rasteranordnung der Löcher (3) der Rahmenlängsholme (2) entsprechender Anordnung vorgesehene Löcher (96) etwa gleicher Grösse wie der der Rahmenlängsholme (2) aufweist, und eine der Zahl der Paare solcher Lagerschilde (95) entsprechende Anzahl von Führungswalzen (97) bzw. Sätzen derselben sowie eine der Zahl der für die Befestigung dieser Lagerschilde (95) an den zugeordneten Rahmenlängsholmen (2) vorgesehenen Löcher (3, 96) entsprechende Anzahl von vorzugsweise aus Schraubbolzen, Mutter mit Unterlegscheibe und Kontermutter bestehenden Verschraubungen (28).

**Claims**

1. Kit for the production of belt conveyor systems, comprising at least one pair of frame longerons (2), each of which is formed as a profile member of non-planar cross-section and each of which has a linear row of holes (3) arranged at the same hole spacing along its centre line, a plurality of connecting elements or pairs of connecting elements corresponding at least to the number of pairs of the frame longerons and with each connecting element having at each end a fastening flange projecting approximately normal to the axis thereof for the fastening of the said connecting element to an associated frame longeron, conveyor means in the form of a band or belt or a plurality of bands or belts or a hinged belt, a plurality of feeding rollers and take-off rollers corresponding in number to the number of bands or belts or hinged belts and which in the assembled state are each supported respectively by means of a pair of feeding roller supports (15) and take-off roller supports (35) respectively fastenable to an associated frame longeron (2), at least one pedestal (8 and 9) having, in the assembled state, connecting flanges securable respectively to an associated frame longeron and having a number of screw fastenings (28) corresponding in number to the number of the holes which in the assembled state are in correspondence in the components to be fastened to each other, characterised in that the frame longerons (2) are each formed as U- or C-profiles, holes (3) are arranged in the flat base webs (2a) of said profiles each in a linear row with equal hole-to-hole spacing, by means of which holes components (e.g. 4 and 5 and 8 and 9 and 14 and 22 and 34 and 52 and 64 and 66 and 71 and 74 and 79 and 97) to be connected to the frame longerons (2) are fastenable to the frame longerons (2) by screw fastenings fitted through at least two holes (6 and 7 and 48 and 26 and 25 and 65 and 67 and 70 and 74 and 75 and 78 and 81 and 96) arranged at appropriate hole spacings in at least one securing flange (33 and 56 and 10, 47 and 11, 47 and 15 and 24 and 35 and 55a and 55b and 68 and 76 and 80 and 95) which can be brought into contact with the base web (2a) of the frame longeron (2), and in that a drive motor (22) supportable in the assembled state by at least one frame longeron (2) is provided with an entraining connection for the conveyor means (27) and with at least one bearing plate (24) which is fastenable in the same manner to the base web (2a) of an associated frame longeron (2).

2. Kit according to claim 1, characterised in that at least one connecting element (4) is provided which is formed as a crosstie in the form of a solid rod or tubular section with at each end an outwardly projecting peripheral flange (33), wherein the distance between the flanges corresponds in the assembled state to the distance between the outer faces or between the inner faces of the two frame longerons (2), wherein each of said peripheral flanges has at least two holes (6) of approximately the same size as the holes in the frame longerons (2) and arrayed corresponding to the row of the holes (3) in the frame longerons (2).

3. Kit according to claim 1 or 2, characterised in that at least one connecting element (5) is provided which is formed as a U-shaped sheet-metal channel with edge flanges (5b) extending away from its central web (5a) approximately normal to the central web and both in the same direction, said edge flanges being spaced apart in the assembled state by a distance corresponding to the distance between the outer faces or between the inner faces of the two frame longerons (2), wherein each edge flange has at least two holes (7) of approximately the same size as the holes in the frame longerons (2) and arrayed corresponding to the row of the holes (3) in the frame longerons (2), and wherein a number of screw fastenings (28) is provided, preferably consisting of screw bolts, nuts with washers and lock nuts, and which correspond in number to the number of holes (3, 7) provided for the fastening of this connecting element (5) or of these connecting elements (5) to the associated frame longerons (2).

4. Kit according to claim 3, characterised in that the or at least one of the sheet-metal channels (5) has a length (1) corresponding approximately to the length of the frame longerons (2).

5. Kit according to claim 3 or 4, characterised in that the or at least one of the sheet-metal channels (5) has a length (1) which is at most half the length of the frame longerons (2).

6. Kit according to claim 5, with several pairs of frame longerons, characterised by a number of sheet-metal channels (5) corresponding to the number of pairs of frame longerons (2) plus one.

7. Kit according to one of the preceding claims, characterised by at least one pair of pillars (32), preferably a number of pairs of pillars corresponding to the number of pedestals (9), each of which pillars has on its one side a device for holding it stationary for example in the form of a footplate (43) and on its other side a connecting flange (11), and characterised by a number of cross-struts (45) corresponding in number at least to the number of pairs of pedestals (9), with each cross-strut having connecting flanges (46) at each end and arranged in relation to each other in the assembled state with a spacing corresponding to the distance between the outer faces or between the inner faces of the opposed frame longerons (2).

8. Kit according to one of the preceding claims, characterised by at least one cross-strut (44), preferably a number of cross-struts (44) corresponding to the number of pedestals (8), with the or each cross-strut having connecting flanges (10) arranged in the assembled state at a spacing corresponding to the distance between the outer faces or between the inner faces of opposed frame longerons (2), and with the or each cross-strut also having a pillar (31) which extends approximately centrally therefrom and which has a device (42) at its end remote from the cross-strut for holding the pillar stationary.

9. Kit according to claim 8, characterised in that the device (42) for holding the pillar stationary is formed as a footplate.

10. Kit according to claim 8, characterised in that the device (42) for holding the pillar stationary is formed as a supporting stool which is preferably traversable and/or adjustable as to height relative to the cross-strut (44).

11. Kit according to one of claims 7 to 10, characterised in that the pillars (31 and 32) of at least one pair of pillars (32) or the or at least one of the individually provided pillars (31) is or are each formed from at least two telescopically displaceable components (e.g. 32a, 32b) which are fixable in a desired working position by means of a fastening device.

12. Kit according to one of claims 7 to 11, characterised in that the connecting flanges (10 and 11) each have at least two holes (12 and 13) of approximately the same size as the holes in the frame longerons (2), said holes corresponding to the row of holes (3) in the frame longerons (2) and being provided in an array preferably inclined to the central longitudinal line (n) of the associated pillar or pillars (31 and 32), and in that a number of screw fastenings (28), preferably consisting of screw bolts, nuts with washers and lock nuts, is provided, the number corresponding to the number of the holes (3, 12 and 3, 13) provided for the fastening of these connecting flanges (10 and 11) to the associated frame longerons (2).

13. Kit according to one of claims 7 to 12, characterised by at least one pair of swivel flanges (47), each of which has at least two holes (48) of approximately the same size as the holes in the frame longerons (2) and arrayed corresponding to the row of holes (3) in the frame longerons (2) and each of which also has an arcuate elongate slot (50) which is concentric to one of these holes (48) or preferably to a further hole (49), and further characterised by a pair of holes (12 and 13) set in the two connecting flanges (10 and 11) of at least one pedestal (8 and 9) at an angle, in the assembled state, relative to the arrangement of the holes (3) in the frame longerons (2), the spacing between the pair of holes corresponding to the spacing between the midpoint of the arcuate slot (50) and the centre of the hole (48 and 49) in the associated swivel flange (47), and also a pair of fastening screw connections (52) associated with each swivel flange (47), as well as a plurality of screw fastenings (28), preferably consisting of screw bolts, nuts with washers and lock nuts, corresponding in number to the number of the holes (3, 48) provided for the fastening of these swivel flanges (47) to the associated frame longerons (2).

14. Kit according to one of the preceding claims, characterised in that the feeding roller or rollers (20) or the take-off roller or rollers (40) is or are formed as a driving roller or rollers.

15. Kit according to claim 14, characterised in that the roller supports (15 and 35) of the feeding and take-off rollers (20 and 40) serving as driving rollers each have at least two holes of approximately the same size as the holes in the frame longerons (2) provided in an array corresponding to the row of holes (3) in the frame longerons (2), and in that a number of screw fastenings (28), preferably consisting of screw bolts, nuts with washers and lock nuts, is provided, the number corresponding to the number of the holes provided for the fastening of these roller supports (15 and 35) to the associated frame longerons (2).

16. Kit according to claim 14, characterised in that the roller supports (15) of the feeding roller or rollers (20) and/or the roller supports (35) of the take-off roller or rollers (40) each comprise a clamping device (16, 19 and 36, 39) and an endpiece (17 and 37) insertable from the front side of a frame longeron (2) into its hollow profile chamber for guided displacement, by means of which clamping member and endpiece each respective roller support (15 and 35) is adjustable in terms of the spacing between the shaft (21) or axle (41) supported by it and the front face of the associated frame longeron (2) and is securable in the working position.

17. Kit according to claim 16, characterised in that the roller support (15 and 35) introducible into a hollow profile chamber of a frame longeron (2) has in its endpiece (17 and 37) a blind slot (18 and 38) which in the assembled state is symmetrical with reference to the row (m) of holes (3) in the frame longerons (2) and is open towards the free end of the endpiece (17 and 37), and in that the clamping device (16, 19 and 36, 39) comprises a nose (16 and 36) on the roller support (15 and 35) with a threaded hole, and a threaded pin (19 and 39) screwable into the threaded hole and arranged to have its one end brought into contact with a supporting surface on the associated frame longeron (2), as well as for each clamping device at least two screw fastenings (28) corresponding in size to the width of the blind slot and with respective clamping plates or a common clamping plate (30) engaging behind the endpiece (17 and 37).

18. Kit according to one of claims 1 to 13, characterised in that in addition to feeding and take-off rollers (20, 40) there is provided in particular a drive shaft which can be brought into driving connection with the drive motor (22) and which has one or more driving rollers, and in that a pair of bearing plates is provided for this drive shaft, wherein the bearing plates each have at least two holes of approximately the same size as the holes in the frame longerons (2) arranged corresponding to the row of holes (3) in the frame longerons (2), a bearing device is provided for the drive shaft and a holding device is provided for the drive motor (22) which has its take-off shaft coupled to the drive shaft by way of a coupling device either directly or by way of a kinematic traction transmission chain (23) in the form of a belt or chain drive as appropriate for this kinematic traction chain drive (23), as well as a number of screw fittings (28), preferably consisting of screw bolts, nuts with washers and lock nuts, said number corresponding to the number of the holes provided for the fastening of these bearing plates to the associated frame longerons (2), or wherein the bearing plate (24) of the drive motor (22) additionally includes a bearing device for the drive shaft, and for the formation of a pair of bearing plates for the drive shaft includes a further bearing plate (4) which likewise has at least two holes (25) of approximately the same size as the holes in the frame longerons (2) and arrayed corresponding to the row of holes (3) in the frame longerons (2) and comprises a bearing device for the drive shaft, and wherein there is provided a number of screw fastenings (28), preferably consisting of screw bolts, nuts with washers and lock nuts, the number corresponding to the number of the holes (e.g. 25) provided for the fastening of this bearing plate (e.g. 24) to the associated frame longeron (2).

19. Kit according to claim 18 with drive motor with kinematic traction chain drive in the form of a belt or chain drive, characterised in that the bearing plates (e.g. 24) for the drive shaft each comprise a clamping device for changing the axis-to-axis spacing of the take-off shaft of the drive motor (22) relative to the drive shaft.

20. Kit according to claim 18 or 19, characterised in that, in addition to feeding and take-off rollers (20, 40) and drive shaft or shafts, there are provided two deflection rollers or two sets of deflection rollers corresponding to the number of bands (27) or belts or hinged belts, and in that for each axle of these deflection rollers or sets of deflection rollers there is provided a pair of bearing plates each of which has at least two holes of approximately the same size as the holes in the frame longerons (2) and arrayed corresponding to the row of holes (3) in the frame longerons (2), and a bearing device for the associated deflection roller axle, as well as a number of screw fastenings (28), preferably consisting of screw bolts, nuts with washers and lock nuts, the number corresponding to the number of the holes provided for the fastening of these bearing plates to the associated frame longerons (2), or wherein for only one axle of these deflection rollers or sets of deflection rollers there is provided a pair of bearing plates of this construction as well as associated screw fastenings (28), and wherein the bearing plates (e.g. 24) for the drive shaft each comprise a bearing device for the other deflection roller axle, or wherein the bearing plates (e.g. 24) for the drive shaft each comprise two bearing devices by means of which both deflection roller axles can be held in corresponding working positions.

21. Kit according to one of the preceding claims with at least two pairs of frame longerons arranged at an angled relationship to one another for the creation in the assembled state of a kinked belt conveyor, characterised by at least one deflection device (53) for the conveyor means (27), the or each deflection device comprising a pair of bearing supports (54) for the axles (61 and 63) of one or more deflection rollers (60) for the lower run or upper run of the conveyor means (27), as well as one or more hold-down rollers (62) for the other said run, wherein each said deflection device comprises two limbs (55a, 55b), each of which, in the assembled state, is supportable one on one frame longeron (2) and the other on the following frame longeron (2) in the direction of conveyance (F).

22. Kit according to claim 21, characterised in that each said one limb (55a) of each one of the bearing supports (54) comprises a bearing device for the axle (61) of the deflection roller or rollers (60), and the other limb (55b) of each bearing support (54) comprises a bearing device for the axle (63) of the hold-down roller or rollers (62).

23. Kit according to claim 21 or 22, characterised in that the angular setting of the limbs (55a, 55b) of the two bearing supports (54) of at least one deflection device (53) relative to each other can be varied.

24. Kit according to one of claims 21 to 23, characterised in that at least one of the limbs (55a and 55b) of each bearing support (54) has at least two holes of approximately the same size as the holes in the frame longerons (2) and arrayed corresponding to the row of holes (3) in the frame longerons (2), and in that a number of screw fastenings (28), preferably consisting of screw bolts, nuts with washers and lock nuts, is provided, the number corresponding to the number of the holes provided for the fastening of these limbs (55a and 55b) to the associated frame longerons (2).

25. Kit according to one of claims 21 to 24, characterised in that each at least one pair of limbs (55a and 55b) of the bearing supports (54) which lie opposite each other in the assembled state comprises a clamping device (e.g. 56a, 59a) and an endpiece (57a and 57b) insertable from the front side of a frame longeron (2) into its hollow profile chamber for guided displacement therein, wherein said clamping device and endpiece make it possible to adjust and to set into the working position the respective limbs (55a and 55b) in terms of the axis-to-axis spacing of the shafts (61) or axles (63) supported thereby relative to the front face of the associated frame longeron (2).

26. Kit according to claim 25, characterised in that the limbs (55a and 55b) of the bearing supports (54) insertable into a hollow profile chamber of a frame longeron (2) have in each endpiece (57a and 57b) a blind slot (58a and 58b) which is open towards the free end of the endpiece (57a and 57b) and which in the assembled state is symmetrical with reference to the line (m) of the holes (3) in the frame longerons (2), and in that the clamping device (e.g. 56a, 59a) comprises a nose (e.g. 56a) on the limb (e.g. 55a) with a threaded hole, and a threaded pin (e.g. 59a) which is screwable into this threaded hole can be brought so that its one end is in contact with a support surface on the associated frame longeron (2), as well as at least two screw fastenings (28) corresponding in size to the width of the blind slot and with respective clamping plates or a common clamping plate (30) engaging behind the endpiece (e.g. 57a).

27. Kit according to one of the preceding claims, characterised by at least one horn-shaped support member (64), preferably a pair of horn-shaped support members (64), each of which has at least two holes (65) of approximately the same size as the holes in the frame longerons (2) and arrayed corresponding to the row of the holes (3) in the frame longerons (2), and characterised by a number of screw fastenings (28), preferably consisting of screw bolts, nuts with washers and lock nuts, the number of screw fastenings corresponding to the number of the holes (3, 65) provided for the fastening of this horn-shaped support member (64) or these horn-shaped support members (64) on the frame longeron or longerons (2).

28. Kit according to one of the preceding claims, characterised by at least one slidebar (66) arranged, in the assembled state, above an associated frame longeron (2) for the lateral limitation of the goods to be conveyed on the upper run of the conveyor means (27), and at least two support flanges (68) for each of these slidebars, said support flanges each having at least two holes (70) of approximately the same size as the holes in the frame longerons (2) and arrayed corresponding to the row of the holes (3) in the frame longerons (2), as well as a plurality of screw fastenings (28), preferably consisting of screw bolts, nuts with washers and lock nuts, the number of screw fastenings corresponding to the number of the holes provided for the fastening of these support flanges (68) to the associated frame longeron or longerons (2).

29. Kit according to one of the preceding claims, characterised by a feeding funnel (71) which possibly is assembled from individual wall parts (71a, 71b), wherein the funnel comprises a lower region with a clear internal dimension corresponding to the dimension between the external surfaces of the two frame longerons (2) which support it in the assembled state, and wherein the funnel in its opposed sides associated with respective ones of the frame longerons (2) has at least two holes (74) of approximately the same size as the holes in the frame longerons (2) and arrayed corresponding to the row of the holes (3) in the frame longerons (2), or characterised by a feeding funnel (71), possibly composed of individual wall parts (71a, 71b), and at least two support flanges, preferably two pairs of support flanges, connectable to the funnel and arranged at a spacing relative to each other which corresponds in the assembled state to the distance between the external surfaces of the two frame longerons (2) supporting the funnel, wherein the support flanges themselves each have at least two holes of approximately the same size as the holes in the frame longerons (2) and arrayed corresponding to the row of the holes (3) in the frame longerons (2), and also each being provided with a plurality of screw fastenings (28), preferably consisting of screw bolts, nuts with washers and lock nuts, and corresponding in number to the number of the holes (3, 74) provided for the fastening of the lower region of the feeding funnel (71) and of the support flanges for the funnel to the associated frame longerons (2).

30. Kit according to one of the preceding claims, characterised by a take-off chute, possibly composed of individual wall parts, which comprises a lower region with a clear internal dimension corresponding to the distance between the external faces of the two frame longerons (2) which in the assembled state support the chute, wherein the chute, in each of its opposed sides associated with the respective frame longerons (2), has at least two holes of approximately the same size as the holes in the frame longerons (2) and arrayed corresponding to the row of the holes (3) in the frame longerons (2), or characterised by a take-off chute, possibly composed of individual wall parts, and at least two support flanges, preferably two pairs of support flanges, connectable to the chute, wherein the support flanges are arranged relative to each other at a distance corresponding in the assembled state to the distance between the external faces of the two frame longerons (2) which support the chute, and wherein the support flanges for their part each have at least two holes of approximately the same size as the holes in the frame longerons (2) and arrayed corresponding to the row of holes (3) in the frame longerons (2), as well as for each flange a number of screw fastenings (28), preferably consisting of screw bolts, nuts with washers and lock nuts, the number corresponding to the number of holes provided for the fastening of the lower region of the take-off chute and of the support flanges for the chute to the associated frame longerons (2).

31. Kit according to one of the preceding claims, with at least two pairs of frame longerons arranged in association with each other in an angled configuration in the assembled state for the creation of a kinked belt conveyor, characterised by at least one transfer chute, possibly composed of individual wall parts, which has a lower region with a clear internal dimension corresponding to the distance between the external faces of the two frame longerons which support the chute in the assembled state and which, in both its opposed sides associated with respective ones of the frame longerons (2), there are at least two holes of approximately the same size as the holes in the frame longerons (2) and arrayed corresponding to the row of the holes (3) in the frame longerons (2), or characterised by at least one transfer chute, possibly composed of individual wall parts, and at least two support flanges, preferably tow pairs of support flanges, connectable to the chute, wherein the support flanges are arranged in relation to each other at a spacing corresponding in the assembled state to the distance between the external faces of the two frame longerons (2) supporting the chute, wherein the support flanges for their part each have at least two holes of approximately the same size as the holes in the frame longerons (2) and arrayed corresponding to the row of the holes (3) in the frame longerons (2), as well as each flange having a number of screw fastenings (28), preferably consisting of screw bolts, nuts with washers and lock nuts, the number corresponding to the number of the holes provided for the fastening of the lower region of the transfer chute or of the support flanges for the chute to the associated frame longerons (2).

32. Kit according to one of claims 1 to 28, characterised by at least one infeed skid plate arranged above an associated frame longeron (2) in the assembled state for the lateral limitation of the conveyed goods at the feeding position in the region of the upper run of the conveyor means (27), and/or at least one take-off skid plate (74) arranged above an associated frame longeron (2) in the assembled state for the lateral limitation of the conveyed goods at the take-off position in the region of the upper run of the conveyor means (27), preferably a pair of such infeed skid plates and/or a pair of such take-off skid plates (74), wherein each of said skid plates in their lower region has at least two holes (75) of approximately the same size as the holes in the frame longerons (2) and arrayed corresponding to the row of the holes (3) in the frame longerons (2), or characterised by at least one infeed skid plate arranged above an associated frame longeron (2) in the assembled state for lateral limitation of the conveyed goods at the feeding position in the region of the upper run of the conveyor means (27) and/or at least one take-off skid plate (74) arranged above an associated frame longeron (2) in the assembled state for lateral limitation of the conveyed goods at the take-off position in the region of the upper run of the conveyor means (27), preferably a pair of such infeed skid plates and/or a pair of such take-off skid plates (74), wherein each of said skid plates has at least two support flanges (e.g. 76), preferably two pairs of support flanges, connectable to the skid plate or plates, wherein each of said support flanges has at least two holes (e.g. 78) of approximately the same size as the holes in the frame longerons (2) and arrayed corresponding to the row of the holes (3) in the frame longerons (2), as well as each support flange having a number of screw fastenings (28), preferably consisting of screw bolts, nuts with washers and lock nuts, the number corresponding to the number of the holes (e.g. 3, 75 and 3, 78) provided for the fastening of the lower region of the infeed skid plate or plates and/or the take-off skid plate (74) or plates (74) and the support flanges (76) for these plates to the associated frame longerons (2).

33. Kit according to one of claims 1 to 30 and 32 with at least two pairs of frame longerons associated with each other in an angled relationship in the assembled state for the creation of a kinked belt conveyor, characterised by at least one transfer skid plate, preferably a pair of such transfer skid plates, arranged above an associated frame longeron (2) in the assembled state for lateral limitation of the conveyed goods at the feeding position from a part of the belt conveyor device (1) in advance of the kinked position to a part of the conveyor device following the kinked position in the region of the upper run of the conveyor means (27), wherein each of said skid plates in its lower region has at least two holes of approximately the same size as the holes in the frame longerons (2) and arrayed corresponding to the row of the holes (3) in the frame longerons (2), or characterised by at least one transfer skid plate, preferably a pair of such transfer skid plates, arranged above an associated frame longeron (2) in the assembled state for the lateral limitation of the conveyed goods at the transfer position from a part of the belt conveyor device (1) in advance of the kinked position to a part of the conveyor device following the kinked position in the region of the upper run of the conveyor means (27), wherein each of said skid plates has at least two support flanges, preferably two pairs of support flanges, connectable to the plate or plates, wherein each of said support flanges has at least two holes of approximately the same size as the holes in the frame longerons (2) and arrayed corresponding to the row of the holes (3) in the frame longerons (2), as well as each support flange having a number of screw fastenings (28), preferably consisting of screw bolts, nuts with washers and lock nuts, the number corresponding to the number of the holes provided for the fastening of the or each of the lower regions of the transfer skid plates or for the fastening of the support flanges for these skid plates to the associated frame longerons (2).

34. Kit according to one of the preceding claims, characterised by a control panel (79) for the drive motor (22) and a bearing plate (80) with a fastening device for the control panel (79), for example in the form of fastening screws (83), wherein the fastening device has at least two holes (81) of approximately the same size as the holes in the frame longerons (2) and arrayed corresponding to the row of the holes (3) in the frame longerons (2), as well as a number of screw fastenings (28), preferably consisting of screw bolts, nuts with washers and lock nuts, the number corresponding to the number of the holes (3, 81) provided for the fastening of the bearing plates (80) to the associated frame longerons (2).

35. Kit according to one of the preceding claims, characterised by at least one pair of bearing plates (95) each having a receiving hole (98) for the axle of a guide roller (97) or a set of guide rollers (97), wherein each of said guide rollers has at least two holes (96) of approximately the same size as the holes in the frame longerons (2) and arrayed corresponding to the row of the holes (3) in the frame longerons (2), and a number of guide rollers (97) or sets of guide rollers corresponding in number to the number of pairs of such bearing plates (95), as well as a number of screw fastenings (28), preferably consisting of screw bolts, nuts with washers and lock nuts, the number corresponding to the number of the holes (3, 96) provided for the fastening of these bearing plates (95) to the associated frame longerons (2).

**Revendications**

1. Ensemble d'éléments pour la construction de dispositifs transporteurs à bandes comprenant au moins une paire de longerons de châssis (2) dont chacun est constitué par un élément profilé de section non plane et présente, sur son axe médian, des trous (3) disposés dans une matrice linéaire à écartement régulier entre trous, un nombre d'éléments de liaison ou de paires d'éléments de liaison qui correspond au moins au nombre des paires de longerons du châssis, comprenant, de chaque côté, une nervure de fixation qui part à peu près perpendiculairement de ces éléments, pour la fixation de ces derniers à un longeron correspondant du châssis, un organe transporteur, constitué par une bande ou courroie ou plusieurs bandes ou courroies ou encore par une bande articulée à charnières, et un nombre de rouleaux de chargement et de déchargement qui correspond au nombre des bandes ou courroies ou bandes articulées à charnières, chacun de ces rouleaux étant supporté, dans l'état assemblé, au moyen d'une paire de supports de rouleaux de chargement (15) ou de déchargement (35) qui peuvent être fixés à un longeron correspondant (2) du châssis, au moins un pied (8 ou 9) comprenant des flasques de raccordement dont chacun peut être assemblé à un longeron correspondant du châssis dans l'état assemblé, et un nombre d'ensembles à vis (28) qui correspond au nombre des trous, coïncidents à l'état assemblé, des éléments qu'il s'agit de fixer l'un à l'autre, caractérisé en ce que chaque longeron de châssis (2) est constitué par un profilé en U ou en C dans l'aile de fond plane (2a) duquel sont disposés des trous (3) avec un écartement uniforme entre eux, selon une matrice linéaire, trous au moyen desquels les éléments (par exemple 4 ou 5 ou 8 ou 9 ou 14 ou 22 ou 34 ou 52 ou 64 ou 66 ou 71 ou 74 ou 79 ou 97) qu'il s'agit d'assembler aux longerons (2) du châssis peuvent être fixés aux longerons (2) du châssis, par l'intermédiaire d'ensembles à vis qui traversent au moins deux trous (6 ou 7 ou 48 ou 26 ou 25 ou 65 ou 67 ou 70 ou 74 ou 75 ou 78 ou 81 ou 96) disposés à un écartement entre trous correspondant, chacun dans au moins un flasque de fixation (33 ou 56 ou 10, 47 ou 11, 47 ou 15 ou 24 ou 35 ou 55a ou 55b ou 68 ou 76 ou 80 ou 95) qui peut être mis en appui contre l'aile de fond (2a) du longeron (2) du châssis, et en ce qu'il est prévu un moteur d'entraînement (2), qui peut être porté par au moins un longeron (2) du châssis dans l'état assemblé et qui comporte une liaison d'entraînement de l'organe transporteur (27) ainsi qu'au moins une plaque de montage (24) qui peut être fixée de la même façon à l'aile de fond (2a) d'un longeron correspondant (2) du châssis.

2. Ensemble d'éléments selon la revendication 1, caractérisé en ce qu'il est prévu au moins un élément d'assemblage (4) qui est constitué par une entretoise transversale présentant la forme d'un segment de barre massive ou d'un segment de tube et est muni, à chaque extrémité, d'une nervure de bord (33) qui part de ce segment, à un écartement qui, à l'état assemblé, correspond à la distance entre les surfaces externes ou entre les surfaces internes des deux longerons, et dont *chacune présente au moins deux trous (6) de di*-mension à peu près égale à celle des trous des longerons (2) du châssis et qui sont prévus dans une disposition qui correspond à la disposition de la matrice des trous (3) des longerons (2) du châssis.

3. Ensemble d'éléments selon la revendication 1 ou 2, caractérisé en ce qu'il est prévu au moins un élément d'assemblage (5), qui est constitué par une goulotte en tôle en forme de U présentant des nervures de bords (5b) qui partent à peu près perpendiculairement de l'aile centrale (5a) de cette goulotte et qui sont orientées dans le même sens l'une que l'autre, à un écartement qui correspond à la dimension mesurée, dans l'état assemblé, entre les surfaces externes ou entre les surfaces internes des deux longerons (2) du châssis, chacune de ces nervures présentant au moins deux trous (7) de dimension à peu près égale à celle des trous des longerons (2) du châssis, dans une disposition qui correspond à la disposition de matrice des trous (3) des longerons (2) du châssis, et un nombre d'ensembles à vis (28), comprenant de préférence une vis, un écrou muni d'une rondelle et un contre-écrou, qui correspond au nombre des trous (3, 7) prévus pour la fixation de cet élément d'assemblage (5) ou de ces éléments d'assemblage (5) aux longerons correspondants (2) du châssis.

4. Ensemble d'éléments selon la revendication 3, caractérisé en ce que la goulotte de tôle (5) ou au moins l'une des goulottes de tôle présente une longueur (1) qui correspond à peu près à la longueur des longerons (2) du châssis.

5. Ensemble d'éléments selon la revendication 3 ou 4, caractérisé en ce que la goulotte de tôle (5) ou au moins l'une des goulottes de tôle (5) présente une longueur (1) qui correspond au maximum à la moitié de la longueur des longerons (2) du châssis.

6. Ensemble d'éléments selon la revendication 5, comprenant plusieurs paires de longerons de châssis, caractérisé par un nombre de goulottes de tôle (5) qui correspond au nombre des paires de longerons (2) du châssis, majoré d'une unité.

7. Ensemble d'éléments selon l'une des revendications précédentes, caractérisé par au moins une paire, de préférence un nombre de paires de poteaux de pieds (32) qui correspond au nombre des pieds (9), ces poteaux présentant d'une côté, un dispositif d'immobilisation en position fixe, par exemple, une semelle de pied (43) et, de l'autre côté, un flasque de raccordement (11), et par un nombre de barres transversales (45) qui correspond au moins au nombre des paires de pieds (9), ces barres portant des flasques de raccordement terminaux (46), disposés à un écartement mutuel qui correspond, à l'état assemblé, à la distance entre les surfaces externes ou entre les surfaces internes des longerons opposés (2) du châssis.

8. Ensemble d'éléments selon l'une des revendications précédentes, caractérisé par au moins une barre transversale (44), de préférence au moins un nombre de barres transversales (44) qui correspond au nombre des pieds (8), la barre ou *chacune des barres présentant des flasques de* raccordement (10) disposés à un écartement mutuel qui correspond, dans l'état assemblé, à la distance entre les surfaces externes ou entre les surfaces internes des longerons de châssis (2) opposés et présentant un poteau de pied (31) qui part de cette barre à peu près au milieu, ce poteau présentant lui-même, à son extrémité la plus éloignée de la barre transversale, un dispositif (42) servant à l'immobiliser en position fixe.

9. Ensemble d'éléments selon la revendication 8, caractérisé en ce que le dispositif (42) servant à l'immobilisation en position fixe est constitué par une semelle.

10. Ensemble d'éléments selon la revendication 8, caractérisé en ce que le dispositif (42) servant à l'immobilisation en position fixe est constitué par un châssis de pied qui est de préférence mobile et/ou réglable en hauteur par rapport à la barre transversale (44).

11. Ensemble d'éléments selon l'une des revendications 7 à 10, caractérisé en ce que les poteaux de pieds (31 ou 32) d'au moins une paire de poteaux de pieds (32) ou le poteau de pied (31) ou au moins l'un des poteaux de pieds (31) prévu individuellement, est ou sont constitué(s) par au moins deux éléments partiels (par exemple 32a, 32b) qui peuvent s'emboîter télescopiquement l'un dans l'autre et peuvent être immobilisés dans une position de travail désirée au moyen d'un dispositif de blocage.

12. Ensemble d'éléments selon l'une des revendications 7 à 11, caractérisé en ce que les flasques de raccordement (10 ou 11) présentent chacun au moins deux trous (12 ou 13), de dimension à peu près égale à celle des trous des longerons (2) du châssis, prévus dans une disposition correspondant à la disposition de matrice des trous (3) des longerons (2) du châssis, de préférence, inclinée par rapport à l'axe longitudinal médian (n) du ou des poteau(x) de pied(s) correspondant(s) (31 ou 32) et en ce qu'il est prévu un nombre d'ensembles à vis (28), comprenant de préférence une vis, un écrou muni d'une rondelle et un contre-écrou, qui correspond au nombre des trous (13, 12 ou 3, 13) prévus pour la fixation de ces flasques de raccordement (10 ou 11) sur les longerons correspondants (2) du châssis.

13. Ensemble d'éléments selon l'une des revendications 7 à 12, caractérisé par au moins une paire de flasques d'articulation (47) qui présentent chacun au moins deux trous (48) de dimension à peu près égale à celle des trous de longerons (2) du châssis, prévus dans une disposition qui correspond à la disposition de matrice des trous (3) des longerons (2) du châssis et une fente longitudinale (50), en forme d'arc de cercle, concentrique à l'un de ces trous (48) ou de préférence à un autre trou (49), et en outre par une paire de trous (12 ou 13) ménagée dans les deux flasques de raccordement (10 ou 11) d'au moins un pied (8 ou 9) avec une inclinaison par rapport à la disposition, prévue dans l'état assemblé, des trous (3) des longerons (2) du châssis, à un écartement qui correspond à l'écartement entre les centres de la fente (50) en forme d'arc de cercle et du trou central (48 ou 49) prévu dans le flasque d'articulation (47) correspondant, et une paire d'ensembles de blocage à vis (52) associés chacun à un flasque d'articulation (47), ainsi qu'un nombre d'ensembles à vis (28), comprenant de préférence une vis, un écrou muni d'une rondelle et un contre-écrou, qui correspond au nombre des trous (3, 48) prévus pour la fixation de ces flasques d'articulation (47) aux longerons (2) correspondants du châssis.

14. Ensemble d'éléments selon l'une des revendications précédentes, caractérisé en ce que le ou les rouleau(x) de chargement (20) ou le ou les rouleau(x) de déchargement (40) est ou sont constitué(s) par un ou plusieurs rouleau(x) moteur(s).

15. Ensemble d'éléments selon la revendication 14, caractérisé en ce que les supports de rouleaux (15 ou 35) des rouleaux de chargement ou de déchargement (20 ou 40) qui servent de rouleaux moteurs comprennent chacun au moins deux trous de dimension à peu près égale à celle des trous des longerons (2) du châssis, et qui sont prévus dans une disposition qui correspond à la disposition de matrice des trous (3) des longerons (2) du châssis, et en ce qu'il est prévu un nombre d'ensembles à vis (28), comprenant de préférence une vis, un écrou muni d'une rondelle et un contre-écrou, qui correspond au nombre des trous prévus pour la fixation de ces supports de rouleaux (15 ou 35) aux longerons correspondants (2) du châssis.

16. Ensemble d'éléments selon la revendication 14, caractérisé en ce que les supports de rouleaux (15) du ou des rouleau(x) de chargement (20) et/ou les supports de rouleaux (35) du ou des rouleau(x) de déchargement (40) comprennent chacun une pièce d'extrémité (17 ou 37 respectivement) qui peut être engagée par un côté frontal d'un longeron de châssis (2), dans la cavité du profilé de ce longeron, pour y coulisser de façon guidée, et un dispositif de serrage (16, 19 ou 36, 39) au moyen duquel on peut régler le support de rouleaux correspond (15 ou 35) en ce qui concerne l'écartement entre l'arbre (21) ou l'axe (41) supporté par ce support et la surface frontale du longeron correspondant (2) du châssis, et l'immobiliser dans la position de travail.

17. Ensemble d'éléments selon la revendication 16, caractérisé en ce que les supports de rouleaux (15 ou 35) qui peuvent être introduits dans une cavité de profilé d'un longeron de châssis (2) présentent, dans leur pièce d'extrémité (17 ou 37), une fente borgne (18 ou 38) qui est symétrique par rapport à la ligne de matrice (m) des trous (3) du longeron de châssis (2) dans l'état assemblé et qui s'ouvre vers l'extrémité libre de la pièce d'extrémité (17 ou 37), et en ce que le dispositif de serrage (16, 19 ou 36, 39) présente une patte (16 ou 36) portée par le support de rouleau (15 ou 35) avec un trou fileté et une tige filetée (19 ou 39) qui peut être vissée dans ce trou et qui peut être mise en appui par l'une de ses extrémités contre une surface d'appui portée par le longeron (2) correspondant du châssis, ainsi qu'au moins deux ensembles de boulonnage (28) correspondant en dimension à la largeur de la fente borgne et comprenant chacun une plaque de serrage (30) qui se place derrière la pièce d'extrémité (17 ou 37) ou comprenant une plaquette de serrage commune qui se place derrière la pièce d'extrémité (17 ou 37).

18. Ensemble d'éléments selon l'une des revendications 1 à 13, caractérisé en ce que, en supplément au ou aux rouleau(x) de chargement et de déchargement (20, 40), il est prévu en propre un arbre d'entraînement pouvant être mis en liaison cinématique avec le moteur d'entraînement (22) et portant un ou plusieurs rouleau(x) d'entraînement, et en ce qu'il est prévu pour cet arbre une paire de plaques de montage qui présentent chacune au moins deux trous de dimension à peu près égale à celle des trous des longerons (2) du châssis et placés dans une disposition correspondant à la disposition en matrice des trous (3) des longerons (2) du châssis, un dispositif de montage pour l'arbre d'entraînement et un dispositif de retenue pour le moteur d'entraînement (22), qui est accouplé directement par son arbre de sortie à l'arbre d'entraînement par un dispositif d'accouplement, ou encore par l'intermédiaire d'une transmission cinématique (23) constituée par une transmission à courroie ou à chaîne et, si besoin, pour cette transmission cinématique (23), ainsi qu'un nombre d'ensembles de boulonnage (28) comprenant de préférence une vis, un écrou muni d'une rondelle et un contre-écrou, qui correspond au nombre des trous prévus pour la fixation de ces plaques de montage aux longerons correspondants (2) du châssis, ou encore la plaque de montage (24) du moteur d'entraînement (22) présente en supplément un dispositif de montage pour l'arbre d'entraînement et pour la formation d'une paire de plaques de montage pour l'arbre d'entraînement, il est prévu une autre plaque de montage (4) qui présente de même au moins deux trous (25) de dimension à peu près égale à celle des trous des longerons (2) du châssis, placés dans une disposition qui correspond à la disposition en matrice des trous (3) des longerons (2) du châssis, et un dispositif de montage pour l'arbre d'entraînement, ainsi qu'un nombre d'ensembles de boulonnage (28) comprenant de préférence une vis, un écrou muni d'une rondelle et un contre-écrou, qui correspond au nombre des trous (par exemple 25) prévus pour la fixation de cette plaque de montage (par ex. 24) au longeron correspondant (2) du châssis.

19. Ensemble d'éléments selon la revendication 18, comprenant un moteur d'entraînement muni d'une transmission d'entraînement cinématique constituée par une transmission à courroie ou à chaîne, caractérisé en ce que les plaques de montage (par exemple 24) prévues pour l'arbre d'entraînement présentent chacune un dispositif de tension destiné à faire varier l'entre-axes entre l'arbre de sortie du moteur d'entraînement (22) et l'arbre d'entraînement.

20. Ensemble d'éléments selon la revendication 18 ou 19, caractérisé en ce que, en supplément au ou aux rouleau(x) de chargement et de déchargement (20, 40) et au ou aux rouleau(x) d'entraînement, il est prévu deux rouleaux de renvoi ou deux jeux de rouleaux de renvoi correspondant chacun au nombre des bandes (27) ou des courroies ou bandes à charnières, et en ce que, pour chaque axe de ces rouleaux de renvoi ou jeux de rouleaux de renvoi, il est prévu une paire de plaques de montage dont chacune comprend au moins deux trous de dimension à peu près égale à celle des trous des longerons (2) du châssis, et placés dans une disposition qui correspond à la disposition en matrice des trous (3) des longerons (2) du châssis, et un dispositif de montage pour l'axe du rouleau de renvoi correspondant, ainsi qu'un nombre d'ensembles de boulonnage (28), comprenant de préférence une vis, un écrou muni d'une rondelle et un contre-écrou, qui correspond au nombre des trous prévus sur le longeron correspondant (2) du châssis, pour la fixation de ces plaques de montage, ou encore, pour seulement un axe de ces rouleaux de renvoi ou jeux de rouleaux de renvoi, il est préfu une paire de plaques de montage présentant cette configuration, ainsi que des ensembles de boulonnage (28) correspondants, et les plaques de montage (par exemple 24) prévues pour l'arbre d'entraînement présentent chacune un dispositif de montage pour l'autre axe de rouleau de renvoi, ou encore les plaques de montage (par exemple 24) prévues pour l'arbre d'entraînement présentent chacune deux dispositifs de montage au moyen desquels les deux axes de rouleaux de renvoi peuvent être maintenus dans une position de travail correspondante.

21. Ensemble d'éléments selon l'une des revendications précédentes, comprenant au moins deux paires de longerons de châssis, qui doivent être placées l'une par rapport à l'autre selon une disposition angulaire dans l'état assemblé, pour la construction d'un transporteur à bande coudé, caractérisé par au moins un dispositif de renvoi (52) prévu pour l'organe transporteur (27), chacun de ces dispositifs comprenant une paire de supports de paliers (54) pour les axes (61 ou 63 respectivement) d'un ou de plusieurs rouleau(x) de renvoi (60) destiné(s) au brin inférieur ou au brin supérieur de l'organe transporteur (27), ainsi que pour les axes d'un ou de plusieurs rouleau(x) presseur(s) (62) destiné(s) à l'autre brin de cet organe, et dont chacun comprend deux branches (55a, 55b) dont l'une peut prendre appui sur un longeron (2) du châssis et l'autre sur le longeron (2) du châssis qui fait suite au premier dans le sens du transport (F) dans l'état assemblé.

22. Ensemble d'éléments selon la revendication 21, caractérisé en ce qu'une branche (55a) de chaque support de palier (54) présente un dispositif de montage pour l'axe (61) du ou des rouleau(x) de renvoi (60) et l'autre branche (55b) de chaque support de palier (54) présente un dispositif de montage pour l'axe (63) du ou des rouleau(x) presseur(s) (62).

23. Ensemble d'éléments selon la revendication 21 ou 22, caractérisé en ce que les branches (55a, 55b) des deux supports de paliers (54) d'au moins un dispositif de renvoi (53) sont réglables en position angulaire relative.

24. Ensemble d'éléments selon l'une des revendications 21 à 23, caractérisé en ce qu'au moins l'une des branches (55a ou 55b) des supports de paliers (54) présente au moins deux trous de dimension à peu près égale à celle des trous des longerons (2) du châssis et placés dans une disposition qui correspond à la disposition en matrice des trous (3) des longerons (2) du châssis et en ce qu'il est prévu un nombre d'ensembles de boulonnage (28), comprenant de préférence une vis, un écrou muni d'une rondelle et un contre-écrou, qui correspond au nombre des trous prévus sur les longerons correspondants (2) du châssis, pour la fixation de ces branches (55a, 55b).

25. Ensemble d'éléments selon l'une des revendications 21 à 24, caractérisé en ce qu'au moins une paire de branches (55a ou 55b) des supports de paliers (54), qui se font face dans l'état assemblé, présente une pièce d'extrémité (57a ou 57b) qui peut être engagée, à partir du côté frontal d'un longeron (2) dans la cavité du profilé de ce longeron pour y décrire une translation guidée et un dispositif de tension (par exemple 56a, 59a) au moyen duquel la branche correspondante (55a ou 55b) peut être réglée par rapport à la surface frontale du longeron correspondant (2) du châssis, pour la modification de l'entre-axes du ou des arbre(s) (61) ou de l'axe ou des axes (63) supporté(s) par cette branche, et peut être immobilisée dans la position de travail.

26. Ensemble d'éléments selon la revendication 25, caractérisé en ce que les branches (55a ou 55b) des supports de paliers (54), qui peuvent être emmanchées dans une cavité de profilé d'un longeron (2) du châssis, présentent, dans leur pièce d'extrémité (57a ou 57b), une fente borgne (58a ou 58b) qui est symétrique par rapport à la ligne de matrice (m) des trous (3) du longeron (2) du châssis dans l'état assemblé et qui s'ouvre vers l'extrémité libre de la pièce d'extrémité (57a ou 57b) et en ce que le dispositif de tension (par exemple 56a, 59a) présente une patte (par exemple 56a) portée par la branche (par exemple 55a) et munie d'un trou fileté et d'une tige filetée (par exemple 59a) qui peut être vissée dans ce trou fileté et peut être mise en appui, par l'une de ses extrémités, contre une surface d'appui portée par le longeron (2) correspondant du châssis, ainsi que, pour chaque branche, au moins deux ensembles de boulonnage (28) correspondant en dimension à la largeur de la fente borgne et munis d'une plaque de serrage (30) respective ou commune aux deux ensembles à vis, qui vient se placer derrière la pièce d'extrémité (par exemple 57a).

27. Ensemble d'éléments selon l'une des revendications précédentes, caractérisé par au moins une béquille d'appui (64), de préférence un paire de béquilles d'appui (64), qui ou dont chacune présente au moins deux trous (65) à peu près de même dimension que ceux des longerons (2) du châssis et placés dans une disposition correspondant à la disposition en matrice des trous (3) des longerons (2) du châssis, et par un nombre d'ensembles de boulonnage (28), comprenant de préférence une vis, un écrou muni d'une rondelle et un contre-écrou, qui correspond au nombre des trous (3, 65) du ou des longeron(s) (2) correspondant(s) du châssis, qui sont prévus pour la fixation de cette béquille d'appui (64) ou de ces béquilles d'appui (64).

28. Ensemble d'éléments selon l'une des revendications précédentes, caractérisé par au moins une glissière (66) qui est disposée au-dessus d'un longeron (2) correspondant du châssis, dans l'état assemblé, pour assurer la limitation latérale de la matière à transporter sur le brin supérieur de l'organe transporteur (27), et au moins deux pattes supports (68) pour cette glissière ou chacune de ces glissières, et dont chacune présente au moins deux trous (70) de dimension à peu près égale à celle des trous des longerons (2) du châssis et placés dans une disposition qui correspond à la disposition en matrice des trous (3) des longerons (2) du châssis, ainsi qu'un nombre d'ensembles de boulonnage (28), comprenant de préférence une vis, un écrou muni d'une rondelle et un contre-écrou, qui correspond au nombre des trous prévus sur le ou les longeron(s) correspondant(s) (2) du châssis, pour la fixation de ces pattes supports (68).

29. Ensemble d'éléments selon l'une des revendications précédentes, caractérisé par une trémie de chargement (71) éventuellement composée de différents éléments de parois (71a, 71b), qui présente une région inférieure ayant une dimension intérieure libre correspondant à la distance mesurée entre les surfaces externes des deux longerons (2) du châssis qui la supportent dans l'état assemblé et qui, sur chacun de ses côtés mutuellement opposés, associés à un longeron respectif (2) du châssis, présente au moins deux trous (74) de dimension à peu près égale à celle des trous des longerons (2) du châssis, et placés dans une disposition qui correspond à la disposition en matrice des trous (3) des longerons (2) du châssis, ou par une trémie de chargement (71) pouvant être éventuellement composée de différents éléments de parois (71a, 71b), et au moins deux pattes supports, de préférence deux paires de pattes supports, pouvant être fixées à cette trémie, avec un écartement mutuel qui correspond, dans l'état assemblé, à la distance mesurée entre les surfaces externes des deux longerons (2) du châssis qui supportent cette trémie, pattes qui, de leur côté, présentent chacune au moins deux trous de dimension à peu près égale à celle des trous des longerons (2) du châssis et placés dans une disposition qui correspond à la disposition en matrice des trous (3) des longerons (2) du châssis, ainsi qu'un nombre d'ensembles de boulonnage (28), comprenant de préférence une vis, un écrou muni d'une rondelle et un contre-écrou, qui correspond au nombre des trous (3, 74) prévus sur les longerons correspondants (2) du châssis pour la fixation de la région inférieure de la trémie de chargement (71) ou des pattes supports utilisées pour cette trémie.

30. Ensemble d'éléments selon l'une des revendications précédentes, caractérisé par une goulotte de déchargement éventuellement composée d'éléments de parois individuels, qui présente une région inférieure de dimension intérieure libre correspondant à la distance mesurée entre les surfaces externes des deux longerons (2) du chassis qui la supporte dans l'état assemblé, et qui présente, sur chacun de ses côtés mutuellement opposés, associé à un longeron respectif (2) du châssis, au moins deux trous de dimension à peu près égale à celle des trous des longerons (2) du châssis, et placés dans une disposition qui correspond à la disposition en matrice des trous (3) des longerons (2) du châssis, ou par une goulotte de déchargement pouvant éventuellement être composée de plusieurs éléments de parois individuels et au moins deux pattes supports, de préférence deux paires de pattes supports, qui peuvent être fixées à cette goulotte et sont disposées l'une par rapport à l'autre avec un écartement qui correspond, dans l'état assemblé, à la distance mesurée entre les surfaces externes des deux longerons (2) du châssis qui supportent cette goulotte, ces pattes présentant de leur côté chacune au moins deux trous de dimension à peu près égale à celle des trous des longerons (2) du châssis et placés dans une disposition qui correspond à la disposition en matrice des trous (3) des longerons (2) du châssis, ainsi que, pour chacune des pattes, un nombre d'ensembles de boulonnage (28), comprenant de préférence une vis, un écrou muni d'une rondelle et un contre-écrou, qui correspond au nombre des trous prévus sur les longerons (2) du châssis pour la fixation de la région inférieure de la goulotte de déchargement ou des pattes supports utilisées pour cette goulotte.

31. Ensemble d'éléments selon l'une des revendications précédentes, comprenant au moins deux paires de longerons de châssis, qui sont destinées à être disposées l'une par rapport à l'autre dans une disposition angulaire à l'état assemblé, pour la construction d'un transporteur à bande coudé, caractérisé par au moins une goulotte de jonction, qui peut éventuellement être formée par l'assemblage de plusieurs éléments de parois individuels, et qui présente une région inférieure possédant une dimension intérieure libre correspondant à la distance mesurée entre les surfaces externes des deux longerons du châssis qui la supportent dans l'état assemblé et, sur chacun de ses deux côtés opposés respectivement associés aux longerons (2) du châssis, au moins deux trous de dimension à peu près égale à celle des trous des longerons (2) du châssis et placés dans une disposition correspondant à la disposition en matrice des trous (3) des longerons (2) du châssis, ou par au moins une goulotte de jonction pouvant éventuellement être formée par l'assemblage de plusieurs éléments de parois individuels et, pour chaque goulotte, au moins deux pattes supports, ou de préférence deux paires de pattes supports, qui sont espacées l'une de l'autre d'un écartement qui correspond à la distance mesurée entre les surfaces externes des deux longerons (2) du châssis qui les supportent, ces pattes présentant à leur tour chacune au moins deux trous de dimension à peu près égale à celle des trous des longerons (2) du châssis et placés dans une disposition qui correspond à la disposition en matrice des trous (3) des longerons (2) du châssis, ainsi qu'un nombre d'ensembles de boulonnage (28), comprenant de préférence une vis, un écrou muni d'une rondelle et un contre-écrou, qui correspond au nombre des trous prévus sur les longerons correspondants (2) du châssis pour la fixation de la région inférieure de la goulotte de jonction ou des pattes supports utilisées pour cette goulotte.

32. Ensemble d'éléments selon l'une des revendications 1 à 28, caractérisé par au moins une paroi glissière de chargement disposée au-dessus d'un longeron correspondant (2) du châssis dans l'état assemblé, pour la délimitation de la zone de chargement de la matière à transporter, dans la région du brin supérieur de l'organe transporteur (27) et/ou au moins une paroi glissière de déchargement (74) disposée au-dessus d'un longeron correspondant (2) du châssis dans l'état assemblé, pour la délimitation latérale de la zone de déchargement de la matière à transporter, dans la région du brin supérieur de l'organe transporteur (27), de préférence, une paire de telles parois glissières de chargement et/ou une paire de telles parois glissières de déchargement (74), chaque paroi présentant, dans sa région inférieure, au moins deux trous (75) de dimension à peu près égale à celle des trous des longerons (2) du châssis et placés dans une disposition qui correspond à la disposition en matrice des trous (3) des longerons (2) du châssis, ou par au moins une paroi glissière de chargement disposée au-dessus d'un longeron correspondant (2) du châssis dans l'état assemblé, pour la délimitation latérale de la zone de chargement de la matière à transporter, dans la région du brin supérieur de l'organe transporteur (27), et/ou au moins une paroi glissière de déchargement (74) disposée au-dessus d'un longeron correspondant (2) du châssis dans l'état assemblé, pour la délimitation latérale de la zone de déchargement de la matière à transporter, dans la région du brin supérieur de l'organe transporteur (27), de préférence une paire de telles parois glissières de chargement et/ou une paire de telles parois glissières de déchargement (74) et, dans chaque zone de chargement ou de déchargement, au moins deux pattes supports (p. ex. 76), de préférence deux paires de pattes supports, qui peuvent être fixées à cette paroi ou à ces parois, chacune de ces pattes supports présentant au moins deux trous (par exemple 78) de dimension à peu près égale à celle des trous des longerons (2) du châssis, et placés dans une disposition qui correspond à la disposition en matrice des trous (3) des longerons (2) du châssis, ainsi que, à chaque fois, un nombre d'ensembles de boulonnage (28), comprenant de préférence une vis, un écrou muni d'une rondelle et un contre-écrou, qui correspond au nombre des trous (par exemple 3, 75 ou 3, 78), prévus sur les longerons correspondants (2) pour la fixation des régions inférieures de la ou des paroi(s) glissière(s) de chargement et/ou de la ou des paroi(s) glissière(s) de déchargement (74), ou pour la fixation des pattes supports (76) destinées à ces parois glissières.

33. Ensemble d'éléments selon l'une des revendications 1 à 30 et 32, comprenant au moins deux paires de longerons de châssis qui doivent être placés l'un par rapport à l'autre selon une disposition angulaire dans l'état assemblé, pour la construction d'un transporteur à bande coudé, caractérisé par au moins une paroi glissière de jonction disposée au-dessus d'un longeron correspondant (2) du châssis, dans l'état assemblé, pour la délimitation latérale de la zone de chargement de la matière à transporter, d'une partie du dispositif transporteur à bande (1) située en amont du coude à une partie de ce dispositif située en aval du coude, dans la région du brin supérieur de l'organe transporteur (27), de préférence une paire de telles parois glissières de jonction, chaque paroi présentant, dans sa région inférieure, au moins deux trous de dimension à peu près égale à celle des trous des longerons (2) du châssis et placés dans une disposition qui correspond à la disposition en matrice des trous (3) des longerons (2) du châssis, ou par au moins une paroi glissière de jonction disposée au-dessus d'un longeron correspondant (2) du châssis dans l'état assemblé, pour la délimitation latérale de la zone de transfert de la matière à transporter d'une partie du dispositif transporteur à bande (1) située en amont du coude à une partie de ce dispositif située en aval du coude, dans la région du brin supérieur de l'organe transporteur (27), et de préférence, une paire de telles parois glissières de jonction et, à chaque fois, au moins deux pattes supports, de préférence deux paires de pattes supports, destinées à être fixées à cette paroi ou à ces parois, et qui, de leur côté, présentent chacune au moins deux trous de dimension à peu près égale à celle des trous des longerons (2) du châssis et placés dans une disposition correspondant à la disposition en matrice des trous (3) des longerons (2) du châssis, ainsi que, à chaque fois, un nombre d'ensembles de boulonnage (28), comprenant de préférence une vis, un écrou muni d'une rondelle et un contre-écrou, qui correspond au nombre des trous prévus dans les longerons correspondants

26

(2) du châssis, pour la fixation de la région ou des régions inférieure(s) des parois glissières de jonction ou des pattes supports utilisées pour ces parois.

34. Ensemble d'éléments selon l'une des revendications précédentes, caractérisé par un panneau de commande (79) prévu pour le moteur d'entraînement (22), et une plaque de montage (80) munie d'un dispositif de fixation du panneau de commande (79), par exemple sous la forme de boulons de fixation (83), plaque qui présente au moins deux trous (81) de dimension à peu près égale à celle des trous des longerons (2) du châssis, et placés dans une disposition qui correspond à la disposition en matrice des trous (3) des longerons (2) du châssis, ainsi qu'un nombre d'ensembles de boulonnage (28), comprenant de préférence une vis, un écrou muni d'une rondelle et un contre-écrou, qui correspond au nombre des trous (3, 81) prévus sur le longeron correspondant (2) du châssis pour la fixation de la plaque de montage (80).

35. Ensemble d'éléments selon l'une des revendications précédentes, caractérisé par au moins une paire de plaques de montage (95) comprenant chacune un perçage récepteur (98) destiné à recevoir l'axe d'un rouleau de guidage (97) ou d'un jeu de rouleaux de guidage (97), et dont chacune présente au moins deux trous (96) de dimension à peu près égale à celle des trous des longerons (2) du châssis, et placés dans une disposition qui correspond à la disposition en matrice des trous (3) des longerons (2) du châssis, ainsi qu'un nombre de rouleaux de guidage (97) ou de jeux de tels rouleaux qui correspond au nombre des paires de ces plaques de montage (95), ainsi qu'un nombre d'ensembles de boulonnage (28), comprenant de préférence une vis, un écrou muni d'une rondelle et un contre-écrou, qui correspond au nombre des trous (3, 96) prévus sur les longerons correspondants (2) du châssis pour la fixation de ces plaques de montage (95).

Fig. 1

Fig.2